# EUROPEAN PATENT SPECIFICATION

(11) **EP 2 200 868 B1**
(45) Date of publication and mention of the grant of the patent: **13.08.2014**
(21) Application number: 08834554.1
(22) Date of filing: 15.09.2008
(51) Int. Cl.: B60R 9/04

(54) **VERSATILE LEG FOR A ROOF RACK**
UNIVERSALFUSS FÜR EINEN DACHTRÄGER
PIED POLYVALENT POUR UNE GALERIE DE TOIT

(30) Priority: 24.09.2007 NZ 56186007
(43) Date of publication of application: 30.06.2010
(73) Proprietor: Hubco Automotive Ltd, Auckland 9154 (NZ)
(72) Inventor: HUBBARD, Peter Douglas, Christchurch (NZ)
(74) Representative: Murphy, Colm Damien
(86) International application number: PCT/NZ2008/000238
(87) International publication number: WO 2009/041828

(56) References cited:
- EP-A1- 1 712 420
- EP-A2- 0 945 307
- EP-B1- 0 398 885
- EP-B1- 0 646 074
- WO-A1-2009/038480
- US-A- 3 858 774
- US-A- 4 586 638
- US-A- 5 201 487
- US-A- 5 257 710
- US-A1- 2006 049 324
- US-B1- 7 182 233

## Description

### Field of the Invention

The present invention relates to a versatile leg for a vehicle roof rack or load carrier and a roof rack comprising the same. The invention also relates to a novel pad mount and rail mount for attaching to a leg of a roof rack or load carrier.

### Background of the Invention

Roof racks are well known and are manufactured in a variety of configurations. Typically, roof racks include a crossbar with a leg at each end of the crossbar, the legs being used to support the crossbar and attach the crossbar to the roof of a vehicle. The legs are spaced apart from each other a selected distance. Generally, the distance between the legs is determined by the width of the vehicle to which the roof rack is mounted.

The roof rack may be mounted to the vehicle using a variety of different mounting systems. Different types of vehicle typically have different roofs and require different mounts with which to attach a roof rack to the roof of the vehicle: For example, some vehicles have a track or rail on the roof for mounting a roof rack thereto, whilst others have a gutter. Some vehicles may have a door sill that allows for a roof rack to be clamped to the vehicle. Whilst other vehicles are manufactured without any means by which to attach a roof rack. Roof racks are usually attached to such vehicles by riveting a permanent mount to the roof of the vehicle.

Typically, roof rack manufacturers make specific roof rack kits to suit specific roof rack mounting systems. The roof rack kits each comprise different parts that are particular to a specific mounting system. This creates a drawback for the manufacturer who must produce a range of different components parts to fulfil the different roof rack kits. In particular, the manufacturer must typically produce a different type of roof rack leg for each different type of roof rack mounting system attachable to the leg, thereby increasing production costs.

A follow on effect is that retailers sell roof racks as a complete kit including a mounting system for attaching the roof rack to a vehicle, a crossbar for fixedly holding a load, and legs for spacing the crossbar from the roof. This means that a consumer must purchase a complete kit having a suitable mounting system for the particular vehicle to which the roof rack will be attached. When the user wishes to use a roof rack on another vehicle requiring a different mounting means, the consumer must purchase another complete roof rack kit with a mounting system suitable for that other vehicle. Furthermore, a retailer must stock the complete roof rack kits having different mounting means to suit different vehicles. This results in high stock levels for the retailer and is, therefore, undesirable.

Other disadvantages relate to known roof rack mounting systems. In particular, permanent pad mounts must typically be mounted to the main surface of the roof of a vehicle and are a relatively large, prominent and sometimes unattractive roof rack mount that is permanently attached to the roof. Typical permanent pad mounts are too large to fit within the gutter of a vehicle roof and are not at all discrete.

Known mounting systems for attaching a roof rack to a rail are also disadvantageous, in that they are unable to adapt to different sized rails and many are unable to attach to rails having certain profiles. In particular, many known mounting systems for roof racks have difficulty attaching to rails that are fixed to the roof of a vehicle along the length of the rail, as opposed to other types of rails that are fixed to a vehicle's roof via legs.

EP0398885 discloses a roof rack leg, the leg being adapted to be attachable to a plurality of different mounting systems by which to attach the leg to a vehicle wherein the leg comprises a pair of supports joined by a bridge, the bridge supporting a crossbar housing having a profile shaped to fit a crossbar for the roof rack and at least one open side through which the crossbar can slide.

US5257710 discloses a roof rack leg comprising a pair of supports joined by a bridge, the bridge supporting a crossbar housing having a profile shaped to fit a crossbar for the roof rack and at least one open side through which the crossbar can slide, wherein the leg further includes attachment means in the form of an attachment aperture against which is located a nut that provides the attachment aperture with a threaded annular surface.

It is an object of the present invention to go at least some way towards overcoming the above-mentioned disadvantages, or to at least provide the public with a useful choice.

### Summary of the Invention

According to a first aspect, the present invention provides a leg for a roof rack that is adapted to be attachable to a plurality of different mounting systems by which to attach the leg to a vehicle, wherein the leg comprises a pair of supports joined by a bridge, the bridge supporting a crossbar housing having a profile shaped to fit a crossbar for the roof rack and at least one open side through which the crossbar can slide, the crossbar housing further including overhanging opposing lips extending from two closed opposing sides and defining an opening therebetween; the supports having opposing inner locating faces, each locating face having a mounting system locating means in the form of a locating slot for locating a selected mounting system in a correct position on the leg, and wherein the leg further includes attachment means in the form of an attachment aperture against which is located a nut that provides the attachment aperture with a threaded annular surface. For example, the roof rack leg may be attached to a permanent pad mount, a track mount, a rail mount, a gutter mount, a trapdoor mount, and a clamp mount. This allows a retailer to stock a roof rack kit comprising a crossbar and a pair of legs as a standard kit. The retailer is then able to stock the individual mounting systems as separate kits. Therefore, a retailer can reduce their stock levels.

Furthermore, a consumer can use the same standard kit with different mounting systems. If the consumer changes the type of vehicle to which the roof rack will be attached so that a different roof rack mounting system is needed, the consumer needs only to buy the appropriate mounting kit. The consumer can use the same crossbar and legs for all mounting kits.

In one embodiment, the leg is attached to a mounting system comprising a foot having an opening therein, the leg having attachment means by which to attach the leg to a mount on a vehicle.

In a preferred form, the foot may comprise a peripheral edge and foot pad receiving means, wherein the foot is attached to a foot pad having a periphery, an upper surface and a flexible lower surface; the foot pad having an opening extending between the upper and lower surfaces and the foot pad comprising locating means for engaging with the foot pad receiving means to locate the foot pad on the foot.

Preferably, the mounting system further comprises a clamp block, attached to the leg and foot, and a clamp member having an attachment portion that is positioned adjacent to an attachment surface on the clamp block, the clamp member having a hook at or near its distal end; wherein the attachment surface and attachment portion each comprise an aperture through which is positioned an attachment adjustment means to attach the clamp member to the clamp block, and wherein the attachment surface on the clamp block is angled such that tightening or loosening the attachment adjustment means causes the hook of the clamp member to move toward or away from the clamp block.

Alternatively, the attachment means comprises an aperture and the mounting system further comprises a clamp block comprising an aperture that aligns with an attachment aperture on the leg and aligns with the foot opening and foot pad opening through which a fixing means can project to attach to a mount on a vehicle, wherein the foot comprises a pair of pin receiving apertures and the clamp block comprises pin receiving recesses that align with the pin receiving apertures, and wherein the leg comprises pin receiving recesses, through which a pin is positioned to pivotably couple the foot to the leg.

In a more preferred form, the foot pad further comprises a lip surrounding at least a substantial portion of the foot pad periphery and fitted around the peripheral edge of the foot, the foot pad further comprising a skirt projecting below a lower surface of the foot pad, wherein the foot opening and foot pad opening are shaped to allow at least a portion of a permanent pad mount to be positioned therein.

In an alternative preferred form, the fixing means comprises a flanged mounting member adapted to engage with a track on a vehicle to attach the leg to the vehicle and wherein the foot pad comprises a lower surface contoured to fit over the track.

In another embodiment, the leg is attached to a mounting system comprising a first clamp member and a second clamp member, and wherein the position of the second clamp member with respect to the leg is adjustable in the x-direction and the y-direction.

Preferably, the first clamp member comprises a first clamping portion and an adjustment aperture, and the second clamp member comprises: a body having a slot that aligns with the adjustment aperture, and having a second clamping portion projecting from the body, wherein at least a portion of the body is angled toward the leg; and an adjustment member that is adapted to removably engage with one of a plurality of openings located on the leg. The mounting system may also comprise clamp actuating means that engage with the adjustment aperture and the slot to urge the first and second clamp members together or apart.

In another embodiment, the leg is attached to a mounting system comprising a load plate having a body from which projects at least one stilt adapted to fit within a trapdoor opening on a vehicle, and the load plate further comprising means with which to attach the load plate to a vehicle.

Preferably, the mounting system further comprises a foot attached to the load plate, the at least one stilt projecting through a respective opening in the foot, and wherein the foot comprises a peripheral edge and a skirt that extends below the peripheral edge.

More preferably, the load plate comprises a pair of stilts and wherein extension means are removably attached to a free end of each stilt to extend the overall height of the mounting system.

In another embodiment, the leg is attached to a mounting system comprising a foot and a clamp member, the foot and clamp member each comprising an adjustment aperture in alignment with each other; the mounting system further comprising an attachment adjustment means that projects through the adjustment apertures, wherein tightening or loosening the attachment adjustment means causes the foot and clamp member to move toward or away from each other.

In another embodiment, the leg is attached to a mounting system comprising a foot and a clamp member, attachment means by which to attach the clamp member to the foot, and clamp member adjustment means by which the position of the clamp member can be adjusted relative to the foot.

Preferably, the clamp member comprises an adjustment portion adapted to fit within an aperture in the foot and be guided into position by a guide located on the foot, and wherein the clamp member also comprises a hook for hooking around a portion of a rail on a vehicle, wherein the attachment means comprises threaded apertures for engaging with a threaded shaft to attach the foot and clamp member together, and wherein rotating the shaft causes the hook to move toward or away from the foot.

In another embodiment, the leg is attached to a mounting system comprising a foot, a clamp adjustment guide member, and an adjustable clamp member having a body comprising engagement means that are adapted to engage with a clamp adjustment means; wherein the clamp adjustment guide member comprises a body having a slot therein and one or more connectors projecting therefrom, each connector being in sliding engagement with an opening in the foot; and wherein the body of the guide member is adapted to be slidingly engaged with an opening in the clamp member, the mounting system further comprising clamp adjustment means moveably attached to the foot and projecting through the engagement means of the clamp member and the slot to attach the clamp member and guide member to the foot, whereby the clamp member can move in the x-direction and the y-direction with respect to the leg.

Preferably, the engagement means of the clamp member comprises a collar and the clamp adjustment means comprises a threaded shaft for engaging with a threaded aperture within the collar.

More preferably, the mounting system further comprises a clamp support comprising means by which the support is attached to the guide member and comprising a body with a supporting surface that abuts a non-clamping face of the clamp member.

In another embodiment, the invention provides a roof rack comprising a roof rack leg according to the invention.

The term "roof" is used in a broad sense herein as being any outer surface of a vehicle but more preferably relates to substantially horizontal surfaces thereof, such as the roof of a passenger compartment and / or a boot or trunk, where provided. Substantially horizontal surfaces are preferred in that they will generally provide greater stability for a load to be carried by the roof rack. However, the skilled man will be aware of particular applications where it is beneficial for couplings to be to a surface which is orientated other than in a horizontal plane and the scope of the present invention includes such applications.

The term "roof rack" as used herein should be interpreted to include the similar term "load carrier".

Similarly, the term "crossbar" is to be interpreted broadly to include a roof rail or any load carrying apparatus configured to be clamped or attached to a roof rack leg.

The term "vehicle" or "relevant vehicle" means the vehicle to which a user intends to attach a roof rack.

The term "comprising" as used in this specification and claims shouted be interpreted to mean "consisting at least in part of" or "including". That is, when interpreting independent claims comprising that term, the features prefaced by that term in each claim all need to be present but other features can also be present. Variants, such as "comprised" and "comprises" are to be interpreted in a similar manner.

### Brief Description of the Drawings

Further aspects of the present invention will become apparent from the following description which is given by way of example only and with reference to the accompanying drawings in which:
Figures 1 and 2 are perspective views from the side and above, respectively, of a leg according to an embodiment of the invention;
Figures 3 and 4 are perspective views of part assemblies of embodiments of the invention;
Figure 5 is a perspective view of the underside of the leg of Figures 1 and 2;
Figures 6 and 7 are perspective views of a pad mount of an embodiment of the invention;
Figure 8 is a perspective view of a foot pad according to an embodiment of the invention;
Figure 9 is a perspective view of a foot according to an embodiment of the invention;
Figures 10 and 11 are alternative perspective views of a clamp block according to an embodiment of the invention;
Figures 12 to 14 show perspective views of part assemblies of embodiments of the invention;
Figures 15 and 16 are plan and end views of a track according to an embodiment of the invention;
Figures 17 and 18 are perspective views of front and rear, respectively, end plugs for the track of Figures 15 and 16;
Figure 19 is a perspective view of the underside of a leg according to an embodiment of the invention;
Figures 20 to 23 show component parts of an assembly of Figure 19;
Figures 24 to 31 show component parts of an example assembly for coupling to a trapdoor mounting;
Figures 32 and 33 show component parts of an example assembly for coupling to a gutter provided on or at the edge of a vehicle roof;
Figure 34 shows one component part of a mounting means that clamps the roof rack to the door sill of a vehicle;
Figure 35 shows a perspective view of another component part of a mounting means that clamps the roof rack to the door sill of a vehicle;
Figure 36 shows a perspective view from the side of a foot according to one embodiment of a flush rail clamp mounting system according to the invention;
Figure 37 shows another perspective view of the foot of figure 36 from the rear;
Figure 38 shows a side perspective view of a clamp member for use with the foot of figures 36 and 37;
Figure 39 shows a perspective view from the rear of the clamp member of figure 38 engaged with the foot of figures 36 and 37;
Figure 40 shows a perspective view from the side of the combination of parts shown in figure 39;
Figure 41 shows a perspective view of the flush rail clamp mounting system of figures 36 to 40 when attached to a roof rack leg; _
Figure 42 shows the arrangement of figure 41 when attached to flush rail mount;
Figure 43 shows a perspective view from the front of one form of a foot for use with one form of raised rail mounting system according to the invention;
Figure 44 shows another perspective view of the foot of figure 43;
Figure 45 shows a perspective view of one form of clamp adjustment guide member for use with a raised rail mounting system according to the invention;
Figure 46 shows a perspective view of one form of clamping member for use with a raised rail mounting system according to the invention;
Figure 47 shows a perspective view of the clamp adjustment guide member of figure 45 attached to the clamping member of figure 46;
Figure 48 shows one form of clamp support for use with a raised rail mounting system according to the invention;
Figure 49 shows a perspective view of the clamp support of figure 48 attached to the arrangement of figure 47;
Figure 50 shows a perspective view of the foot of figures 43 and 44 attached to the arrangement of figure 49; and
Figures 51 and 52 are perspective views of the arrangement of figure 50 attached to a roof rack leg.

### Detailed Description of Preferred Embodiments

According to one embodiment of the invention, there is provided a leg 20 for a roof rack. The roof rack typically comprises a pair of legs at each end of a crossbar, the legs being used to support the crossbar and to directly or indirectly attach the roof rack to a vehicle. To attach the roof rack to a vehicle, the leg is adapted for coupling to a plurality of different mounting systems. Thus, separate mounting means may be used to attach the leg to the vehicle. Because the same leg can be used with a plurality of different mounts, a manufacturer and retailer can provide a lesser number of different components in a roof rack kit than in conventional roof rack kits. A standard kit comprising a crossbar and a pair of legs can be provided and separate kits for each mounting system can also be provided. Therefore, a consumer can purchase a standard kit together with whichever mounting system is required for the vehicle to which the roof rack will be attached.

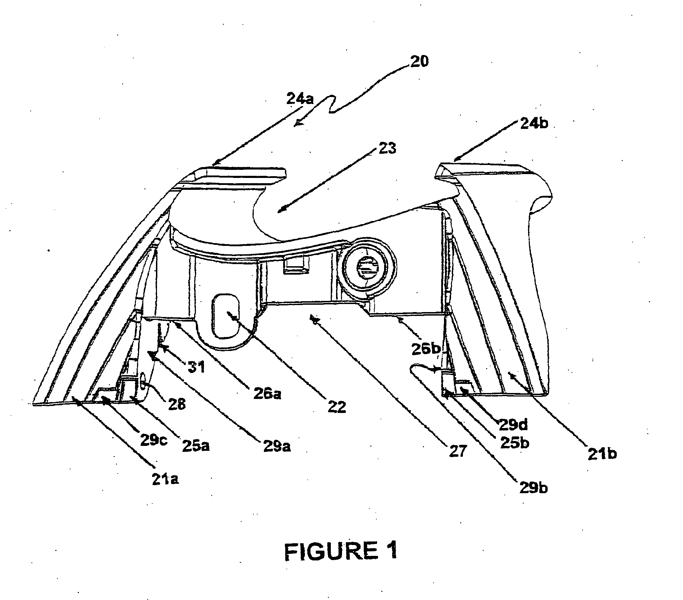

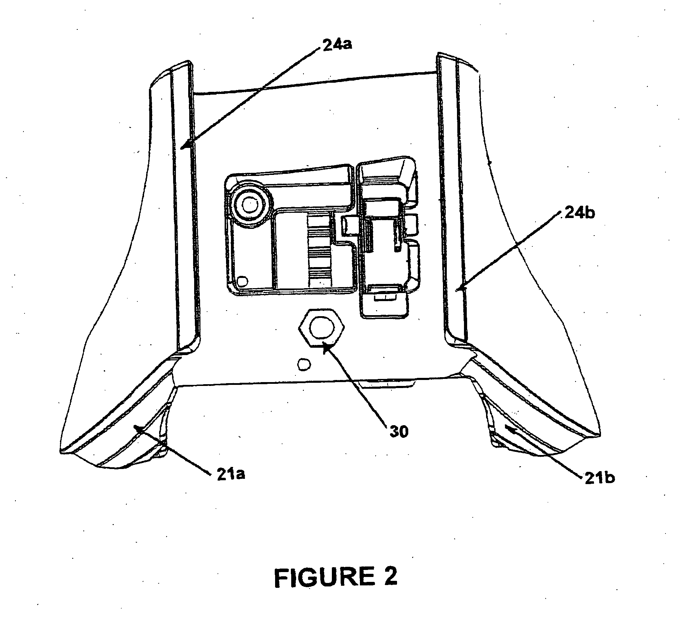

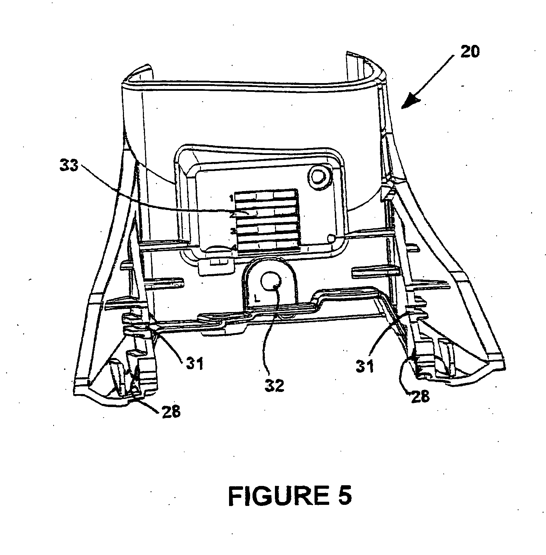

Figure 1 is a perspective view of the leg 20 for a roof rack according to an embodiment of the invention. Figure 2 is a corresponding plan view from above. The leg 20 comprises a base having two supports or splayed arms 21a, 21b. The supports or arms 21 a, 21 b of the leg 20 have opposing inner locating faces 29a, 29b. Near the inboard end of each of the locating faces 29a, 29b of the supports is positioned a locating slot 31 (see Figure 5 also). The inboard end is the end that faces the opposing leg at the other end of the crossbar of the roof rack. Between the supports or arms 21 a, 21 b is a central portion in the form of bridge 27. Above the bridge 27 is located a crossbar housing 23, which comprises a mounting system attachment means in the form of an aperture 30 against which or in which is located a nut or other means that provides the attachment aperture 30 with a threaded annular surface. The crossbar housing comprises a concave portion at the top of leg 20. The crossbar housing 23 has a profile that is shaped to fit a crossbar for the roof rack and has at least one open side through which a crossbar can slide.

The concave floor of the housing also comprises two closed opposing sides. Opposing lips 24a, 24b extend from the closed sides of the concave floor and define an opening in between. Overhanging lips 24a, 24b prevent the crossbar from pulling upward out of housing 23 when upward force is applied to the roof rack.

The crossbar housing 23 secures and supports the crossbar to the leg 20. Note that it is not essential for there to be an opening between the lips 24a, 24b. Also included within the scope of the invention is a housing in which the lips 24a, 24b are joined so that the housing encompasses a crossbar.

While the particular embodiment shown provides a crossbar housing shaped to support a crossbar having an aerodynamic cross-section, the invention is not limited thereto. It is envisaged that the leg may comprise a crossbar housing that is shaped to hold and support a crossbar having a different cross-sectional shape. Thus, the present invention may be applied to roof racks and legs for roof racks having different configurations, such as crossbars having a different profile. Furthermore, while it is preferable for the legs of the roof rack to be detachable from the load bearing portions of the roof rack such as the crossbars, roof racks with legs integral thereto are also included within the scope of the invention.

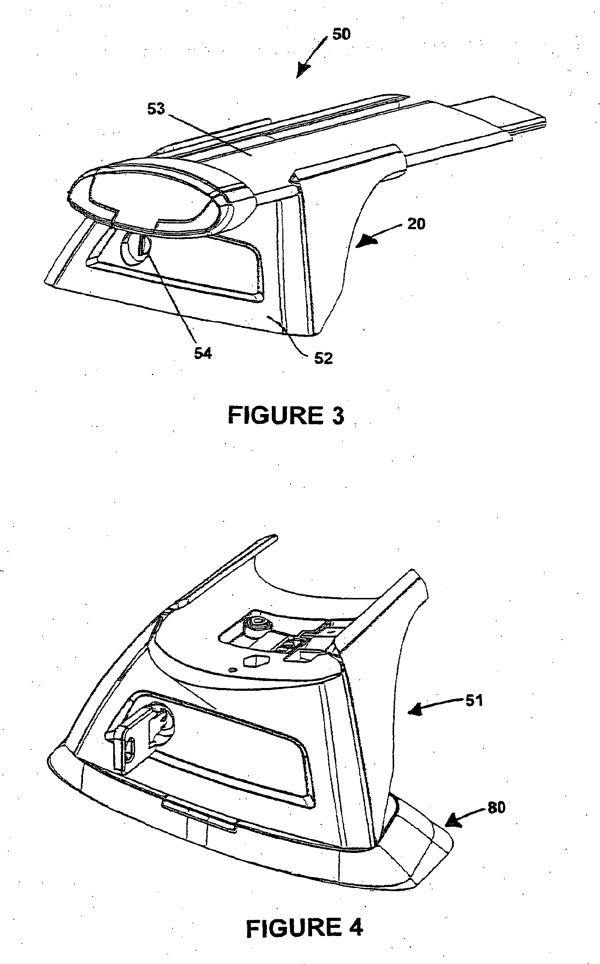

Figure 3 shows a portion 50 of a roof rack according to an embodiment of the invention. Portion 50 includes a leg 20, leg cover 52, crossbar 53 and locking means 54. The leg cover 52 is lockably engageable with the leg 20 via locking means 54 so as to prevent unauthorised access to internal components of the leg 20, thereby preventing an unauthorised user from dismantling and detaching the roof rack from the roof of a vehicle without the appropriate key. According to preferred embodiments, the locking means 54 comprises a latch which is configured to mate with a hollow / recess / protrusion provided on the leg 20. Thus, the locking means attaches to both the leg 20 and the leg cover 52 to lock the leg and cover together.

In Figure 4, the crossbar 53 has been removed and a foot pad 80 added. The foot pad 80 is preferably formed from a rubber moulding. The foot pad sits between the base of the leg and surface of a vehicle to which it is attached and helps prevent noise caused by vibrations between the base of the leg 20 and the vehicle surface. It also prevents damage, particularly to the paintwork of the vehicle, in the area of the join between the roof rack and the vehicle roof.

According to preferred embodiments of the invention, the configuration and profile of the foot pad 80 may be varied depending on the particular anchor point used to attach the leg to a vehicle, so that the lower surface profile thereof generally conforms to that of the surface of the anchor point. The term "anchor point" is intended to cover the points on the vehicle to which the leg of the roof rack will be attached. For example, the rail, the ditch, the roof, etc. In other words, different forms of foot pad may be used depending on the manner in which the roof rack is to be mounted to a vehicle.

Figure 5 shows the underside of the leg 20. Of particular note, there is shown an engagement portion 33, typically comprising a plurality of slots, further discussion of which will be provided hereinbelow.

The roof rack leg of the invention can be attached to many different mounting means in order to attach the roof rack to the particular roof rack mount provided on the surface of a vehicle.

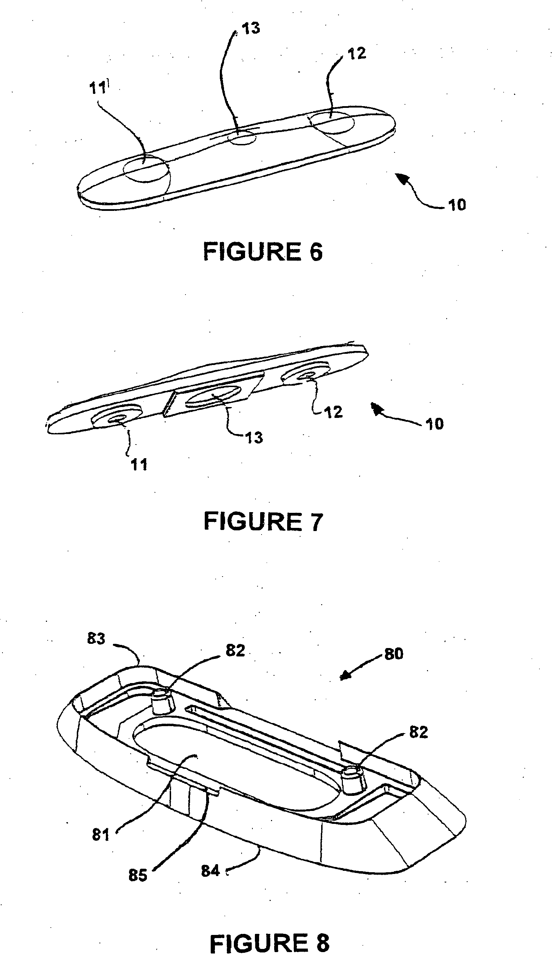

Figures 6 and 7 show perspective views of one type of roof rack mount in the form of a pad mount 10 for attachment to the roof of a vehicle. The pad mount consists of a mounting member that may be attached to the roof in any suitable position. The pad is configured so that it can also be attached to the roof by positioning the pad in a ditch or gutter in the roof, the ditch being provided for the controlled carriage of water.

The pad mount 10 includes a raised upper surface. In the embodiment shown in figures 6 and 7, the pad mount 10 is an elongate oval with a raised upper surface that peaks at its centre. However, it is envisaged that other shapes of pad mount may be used provided that the interlocking parts of the mounting means of the roof rack assembly are adapted to correspond with the shape of the pad mount.

The pad mount also includes first and second mounting apertures 11, 12, respectively, each for receiving a fixing means (for example, a rivet) therethrough. Co-located holes are provided in the roof of the vehicle such that the fixing means may pass therethrough also. A third aperture 13, is preferably positioned between the first and second mounting apertures 11, 12. 2.

The attachment aperture 13 in the permanent pad may have a threaded annular surface or the permanent pad mount 10 may include a cavity in its lower surface in which a flanged nut having a threaded annular aperture is positioned. In such an embodiment, the flanged nut is preferably secured to the bottom surface of the permanent pad mount 10. The threaded aperture of the flanged nut aligns with central aperture 13 in the permanent pad mount.

The lower surface of the pad mount has a recessed area, or cavity, around the first, second, and third apertures 11, 12, 13. The recessed area or cavity is sufficiently deep to receive gaskets therein.

To attach the pad mount 10 to the roof of a vehicle. A gasket is placed around each of the first and second apertures 11, 12. The gasket provides a tight seal between the pad mount and the roof of the vehicle. A rivet, or other suitable fixing means is then positioned in each of the first and second apertures 11, 12 and the co-located holes in the roof so that the rivets extend through apertures 11, 12 to attach the pad mount to the vehicle roof.

To attach a roof rack to the pad mount, it is first necessary to describe the component parts of the permanent pad mounting system that will engage with the permanent pad mount 10.

Figure 8 shows a component part for the permanent pad mounting system in the form of a foot pad 80 configured for use with the pad mount of Figures 6 and 7. Foot pad 80 includes an aperture 81, locating attachment means in the form of at least one spigot 82, a lip 83, which is provided around at least a substantial portion of the edge of the upper surface of the foot pad 80, and a skirt 84. The aperture 81 is configured to mate with the raised portion on the upper surface of pad mount 10 as shown best in Figure 6 and to provide access to the attachment aperture 13 of the permanent pad mount. Therefore, when the foot pad 80 is used with a pad mount, the pad mount is positioned on the roof of a vehicle, or in the ditch of a vehicle, and the foot pad 80 is positioned above the pad mount such that the raised portion of the pad mount projects slightly through the aperture 81 in the foot pad 80. The outer skirt 84 of the foot pad 80 is preferably dimensioned to completely cover or shroud the pad mount 10.

The foot pad is typically made from a soft, flexible, resilient material, such as rubber or a suitable plastic, for example.

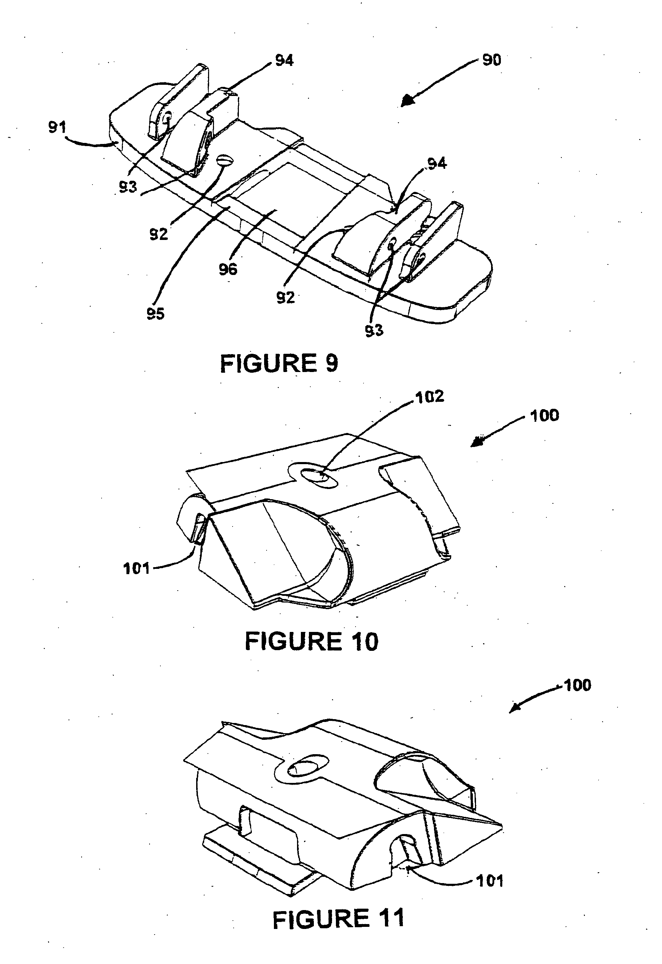

Figure 9 shows another component part for the permanent pad mounting system in the form of a foot 90 for attaching to the base of the leg 20 of the roof rack. The bottom surface of the foot 90 includes an aperture or recess shaped to receive a portion of the upper profiled surface of the permanent pad mount 10 that extends through the central aperture 81 in the foot pad 80.

The foot 90 attaches to the foot pad 80 via a peripheral edge 91 of the foot, which is configured to sit inside and abut the peripheral lip 83 of the foot pad 80, and via the mating of the at least one locating spigot 82, positioned on the upper surface of the foot pad, with corresponding foot pad receiving means in the form of one or more apertures 92 or recesses positioned on the base of the foot 90. In the preferred form, the foot pad includes a pair of locating spigots that mate with a pair of foot pad receiving apertures on the foot. However, it is envisaged that other means of attaching the foot pad to the foot may be used, as would be readily apparent to a person skilled in the art.

The foot 90 further includes pin receiving apertures 93 that align with pin receiving apertures 28 in the leg 20 (see Figures 1 and 5). To couple the foot to the leg, each pin receiving aperture 28 in the leg is positioned between a respective pair of apertures 93 on the foot 90. A pin 121 is located at each side of the leg and foot so that the pin extends through pin receiving apertures 28 and 93 to couple the foot to the leg.

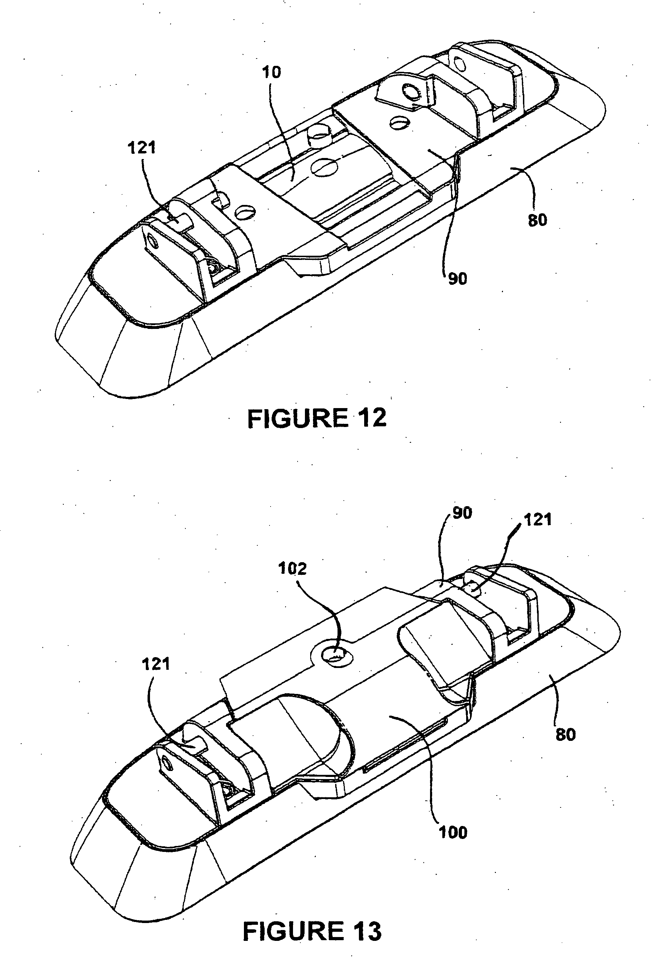

Figure 12 shows a part assembled product including a permanent pad mount 10, nestled within a foot pad 80, a foot 90, and one pin 121.

According to preferred embodiments, each pin 121 provides for a limited amount of rotational movement between the foot 90 and the leg 20, so that the foot can pivot slightly relative to the leg. This feature of the invention allows the assembled roof rack to be orientated to suit a particular vehicle roof or a particular portion of a vehicle roof. For example, the roof rack may be mounted to a portion of the vehicle that has a sloping surface (such as at the outer sides of the vehicle roof), in which case the foot may pivot relative to the leg to provide a substantially flush mount between the foot 90, or at least between the foot pad 80 and the vehicle, whilst the leg 20 can assume a supporting position that allows the crossbar 53 of the roof rack to remain substantially parallel with the main substantially non-sloping surface portion of the vehicle roof.

Another component of the permanent pad mounting system of the invention is a clamp block 100, as shown in figures 10 and 11. Opposing faces of protrusions 94 in the foot are configured to receive the clamp block 100. Each side of the clamp block 100 includes a pin receiving aperture, recess or slot 101 for receiving an end of each respective pin 121 extending through pin receiving apertures 28 and 93. Each pin receiving recess or slot 101 is adapted such that the clamp block snaps in place by interlocking each pin 121 in each respective recess 101. Therefore, each pin 121 couples the leg 20, foot 90, and clamp block 100 to each other and allows the foot 90 and clamp block 100 to pivot slightly relative to the leg 20.

Figure 13 shows a part assembled product including a permanent pad mount 10, nestled within a foot pad 80, attached to a foot 90, and clamp block 100 by pins 121.

Returning to figures 10 and 11, the pin receiving apertures, recesses, or slots 101 in the clamp block 100 have a rear wall, visible when viewed axially along the length of the pin 121 (see figure 11). A first end of each pin 121 abuts the rear wall of the respective clamp block recess 101 and the second end of each pin 121 abuts a pin abutting surface located in the leg. This arrangement serves to ensure that each pin 121 remains inside apertures 28 and 93 without sliding out, thereby securely coupling the leg 20, foot 90, and clamp block 100 to each other.

The clamp block 100 also includes an attachment aperture 102. The foot 90 also has an opening 96 that aligns with the attachment aperture 102 in the clamp block 100 and attachment aperture 13 in the permanent pad mount. Thus, if a permanent pad mount 10 is used to attach the leg to a vehicle roof, such as the mount 10 shown in Figures 6 and 7, a bolt, or other suitable fixing means, is positioned within aperture 102 to extend through the central opening 96 in the foot and engage with the attachment aperture 13 in the permanent pad.

Therefore, to use the permanent pad mounting system of the invention to attach a roof rack to a permanent pad after the permanent pad mount is secured to the vehicle, the leg 20, foot 90 and clamp mount 100 are first fitted together as described above. The foot pad 80 is then fitted to the foot by inserting the spigots 82 inside the foot pad receiving apertures 92 in the foot. A threaded bolt or other suitable fixing means is then used to extend through central aperture 102 in the clamp block, through the central opening 96 in the foot, through the aperture 81 in the foot pad and into central aperture 13 in the pad mount to engage with the threaded annular surface of either the aperture 13 or the flanged nut beneath the aperture 13 to attach the leg, and hence the roof rack, to the permanent pad mount.

In a preferred embodiment, a bolt or grub screw extends through aperture 102, opening 96, aperture 81, and attachment aperture 13. The bolt or grub screw engages with an attachment adjustment means, such as a two load knob, having an engaging surface that can engage with a bolt having a hex shaped end, or can engage with a grub screw. The two load knob allows a user to tighten and loosen the roof rack from the permanent pad mount without the use of tools.

The two load knob is attached to the leg 20 and has an elongate shape such that a leg cover cannot be attached to the leg unless the two load knob is orientated to be substantially parallel with the inner surface of the leg cover. This a safety measure. In particular, the threaded engagement between the bolt / screw and nut / threaded aperture can come loose because of vibrations over time. Because the two load knob is shaped so that it cannot turn once the leg cover is attached to the leg, the bolt / screw and nut / threaded aperture are prevented from coming loose. Therefore, the roof rack of the invention is securely attached to the permanent pad mount.

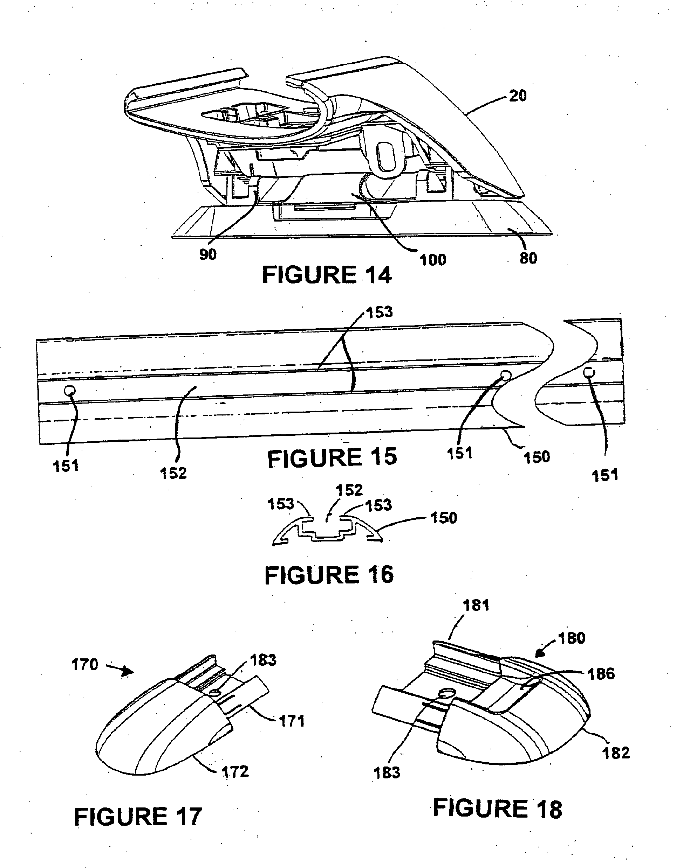

Figure 14 shows a part assembled product including a permanent pad mount 10, nestled within a foot pad 80, attached to a foot 90, attached to clamp block 100 and leg 20 by pin 121.

It will be appreciated that the other means of attaching the components together and of attaching the leg to a permanent pad mount could, alternatively be used, as would be apparent to a person skilled in the art: It will be appreciated also that the foot may include a soft bottom surface and skirt and may be directly attached to the pad mount without the need for a pad in between. The foot may, in another form, be attached directly to the roof rack leg without the need for a clamp block in between. In such a form, the foot and leg would be shaped to provide a sturdy combination of parts and the foot would, preferably, be able to pivot relative to the leg.

The roof rack leg of the invention can also be attached to other mounting systems to allow the roof rack to be attached to different roof rack mounts. In particular, the roof rack leg of the invention is able to attach to a track mount on a vehicle.

Figures 15 and 16 are plan and end views respectively of a track mount 150 to be used with a track mounting system attached to a roof rack leg according to another embodiment of the present invention. The track 150 is configured for attachment to the roof of a vehicle and provides a means for attaching a track mounting means thereto. The track may be attached to a vehicle through holes 151 following provision of corresponding holes in the vehicle roof. Any known fixing means may be used to join the track to the roof.

The track 150 preferably has a contoured upper surface, predominantly for aesthetic reasons. The track 150 also includes a longitudinal groove 152 with opposing edges 153. As will become more readily apparent hereinbelow, the groove 152 and the opposing edges 153 are configured to slidably receive and engage track mounting means coupled to the roof rack leg 20, hallowing the mount means to be positioned at any point along the length of the track as desired. Typically, the opposing edges 153 are angled towards each other or include opposing overhanging lips that define a longitudinal channel in the track, the channel having a longitudinal opening. A T-bolt, or similar flanged mounting means may slide through the groove and be prevented from pulling out of the groove by the overhanging edges 153 when upward force in placed on the track mounting means.

Figures 17 and 18 show front and rear end plugs 170, 180, respectively, for the track 150 of figures 15 and 16. The plugs 170, 180 each have a first end 171, 181 having a profile configured to be slidably received inside an end of the track 150 and a second end 172, 182, comprising a stop to prevent the track mounting means from sliding off the end of the track and which is preferably configured for improved aesthetics and aerodynamics. Note, however, that the second end of rear plug 180 includes a guiding means in the form of a hollow or recess 186. The recess 186 is configured to allow a track mounting means, such as a T-bolt to fit into the track 150. In effect, the recess 186 provides a guided opening through which the track mounting means can be inserted into the groove 152 and below the opposing lips for engagement with the groove 152 and opposing edges 153.

Plugs 170, 180 may be fixed in position by the insertion of fixing means (such as screws or rivets, for example) inside apertures 173, 174, respectively.

The track mounting system is attached to a roof rack leg of the invention such as that shown in Figure 1. The track mounting system includes a foot 90 (as shown in Figure 9) attached to clamp block 100 and leg 20 via pins 121 as previously described herein. The track mounting system also includes a track foot pad (not shown) that has attachment means in the form of spigots on its upper surface, similar to the arrangement shown in foot pad 80 (see Figure 8), that engage with foot pad receiving means, in the form of recesses or apertures 92, in the foot 90 to attach the foot pad to the foot 90. Other ways of attaching the foot pad to the foot may, alternatively, be used.

The track foot pad has a central opening or aperture through which a bolt can be located. The bottom surface of the track foot pad is profiled to correspond with the shape of the track 150 so that the track foot pad can sit over the track 150 and the edges of the pad can contact the roof of the vehicle. With this arrangement the track foot pad sits neatly over the track and sits flush on the vehicle roof, creating an aesthetic arrangement and minimising wind noise resulting from the coupling of the roof rack to the track 150.

The track foot pad not only enhances the appearance of the coupling between the roof rack and the track on the roof of the vehicle, but also provides friction between the foot 90 and the track 150 to reduce slippage between the two parts.

A flanged mounting member, such as a T-bolt, is inserted so that the shaft of the T-bolt extends through the aperture or opening in the track foot pad, through the opening 96 in the foot 90, and through the aperture 102 in the clamp block 100 to attach to the leg of the roof rack. Thus, the inverted "T" part of the bolt projects below the bottom surface of the track foot pad. An attachment adjustment means in the form of a nut, or other suitable fastener, such as a two load knob in combination with a fastening means,, is engaged with the end of the shaft of the T-bolt to prevent the T-bolt from retracting from the assembly and to allow a user to tighten the assembly to the track after fitting the assembly to the track.

To fit the leg 20 and track mounting system to the track 150, The "T" of the T-bolt is positioned within guiding recess 186 located in the rear plug 180 of the track. The assembly is then slid forward so that the "T" of the T-bolt slides under the opposing lips or angled opposing edges 153 and sits within the channel formed by the longitudinal groove 152 and opposing edges 153. The overhanging lips or angled opposing edges partially envelop the inverted "T" thereby attaching the T-bolt and the attached roof rack leg to the track 150.

The assembly is slid to the desired position along the track. Once in the desired position, the user uses the attachment adjustment means, in the form of a nut, two load knob, or other suitable fastener, to tighten the assembly to the track.

It is envisaged that the foot pad may be integral with the foot, thereby providing a soft, flexible lower surface to the foot and being contoured to fit over the track 150.

It is also envisaged that the foot and leg may be adapted to join together without requiring a clamp block, as would be readily apparent to a reason skilled in the art.

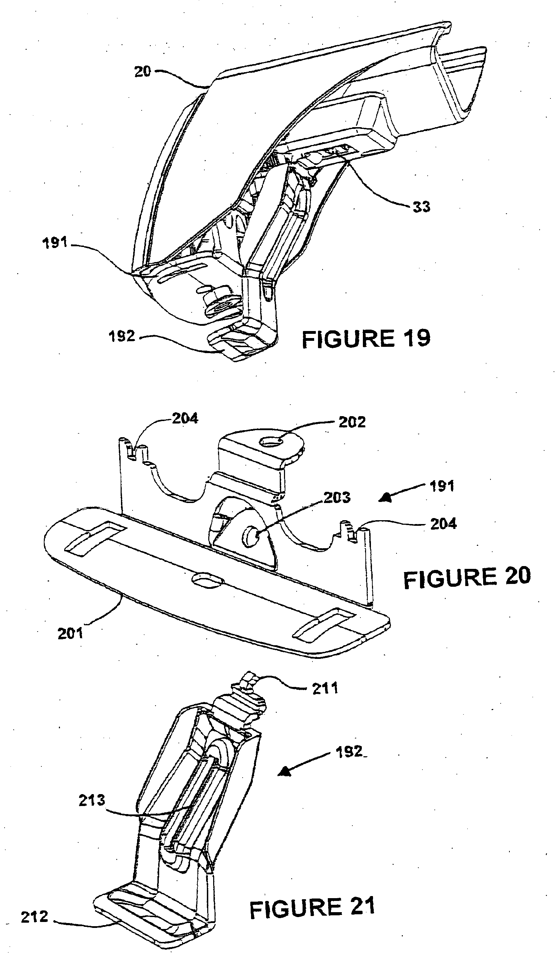

The roof rack leg of the present invention can also be used with a rail mounting system to attach to a rail mount on a vehicle. Some components of the rail mounting system are shown in figures 19 to 23.

When using a rail mounting system, a different foot pad to foot pad 80 is used. The rail foot pad (not shown) used for the rail mounting system has a substantially flush bottom surface and an attachment aperture. The rail foot pad has an opening that allows the pad to slip over the flange 201 of a load plate, or first clamping member 191 of the rail mounting system (see figure 20).

Unlike the permanent pad mounting system and track mounting system, the rail mounting system does not use a foot 90. In particular, the rail foot pad provides lips on its upper surface that allow a first clamping portion or flange 201 of the first clamping member 191 to slide under the lips to attach the flange 201 to the rail foot pad. The rail foot pad is a substantially rectangular pad to correspond with the shape of a roof rail. An outer wall or skirt extends from the three sides of the foot pad at the edges of the pad. The skirt extends below the bottom surface of the pad. The inboard edge of the pad (the edge that faces the opposing pad attached to the other leg of the roof rack) preferably does not include a skirt. The outer edge of the pad (opposite the inboard edge) has a skirt that is longer than the two side edges so that the foot pad, when attached to the rail, is substantially flush with the upper surfaces of the rail and is aesthetically pleasing.

Figure 19 is a perspective view of the underside of a leg assembly comprising a rail mounting system according to an embodiment of the invention. To aid clarity, the foot pad has not been showing in the drawings depicting the rail mounting system. The assembly shown includes first and second clamp members 191, 192, respectively.

The first and second clamp members 191, 192 are adapted for clamping to a flush rail. A flush rail is the type of rail that has a bottom surface, which is in contact with the roof of a vehicle. Each rail, when placed on the vehicle, typically slopes or curves toward the opposing rail and each rail has an upper lip projecting toward the opposing rail on the roof. The cross-section of the rail is somewhat like an inverted "L" with the leg of the "L" comprising the lip that faces in the direction of the opposing rail.

A raised rail is one in which the rail is supported by a leg at each end, the bottom surface of the rail being distanced from the roof of the vehicle.

Figure 20 is a perspective view of the first clamp member 191, also known as a load plate. The first clamp member 191 includes flange 201 and apertures 202, 203 and locating slots 204.

The first clamp member 191 is attached to the roof rack leg 20 by engaging the locating slots 204 with locating slots 31 in the leg. An attachment aperture 202 provided in the first clamp member 191 aligns with the mounting system attachment means in the form of an aperture 32 provided in the leg 20 (see Figure 5). To attach the first clamp member to the leg, a bolt, screw, or other suitable fastener is pushed through the attachment aperture 202 from the bottom surface of the clamp member 191 and through aperture 32 in the leg to engage with a threaded nut 30 positioned within the crossbar housing in the leg and aligning with aperture 32. However, it will be appreciated that other methods of attaching the first clamp member to the leg may, alternatively, be used, as would be apparent to a person skilled in the art.

Figure 21 is a perspective view of a second clamp member 192 that includes an adjustment means in the form of a protrusion or hook 211, a second clamping portion in the form of a flange 212, and a body, at least a portion which is angled toward the leg when attached to the leg, the body having an adjustment slot 213 therein. The hook 211 is configured to engage with engagement means 33 (see Figures 5 and 19). Engagement means 33 preferably comprises a number of adjustment apertures or slots (as shown in Figures 5 and 21) which allow the lateral position of the second clamp member to be varied to suit rails of different sizes.

As will be explained more fully hereinbelow, the hook 211 and engagement means 33 enable pivotal movement of second clamp member 192. The hook 211 is configured to engage with any one of the adjustment slots 33 so as to allow the second clamping member to move in the x-direction, with respect to the leg, to adjust the rail mount so as to be able to attach to rails of different sizes.

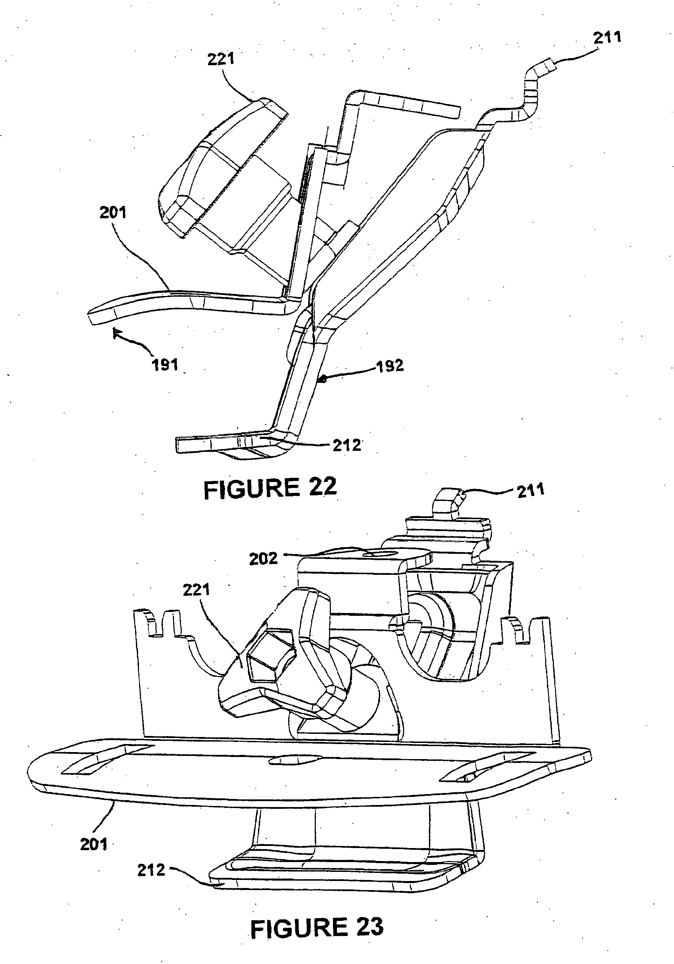

Figures 22 and 23 are side and perspective views of portions of the assembly of Figure 19. Other elements have been removed to aid clarity in respect of the features shown. In addition to the elements shown in Figures 19 to 21, the arrangement of Figures 22 and 23 includes a clamp actuating means 221.

As previously mentioned, the first clamp member 191 is fixed in position relative to the leg 20 via an aperture 202 and locating slots 204, 31, and the second clamp member 192 is able to pivot about the hook 211.

To attach the second clamping member 192 to the leg 20, the hook 211 is hooked into the engagement means via the appropriate adjustment slot 33 for the size of rail to which the roof rack will be attached. A fastening means, such as a coach bolt, or shaft, is then passed outwardly through the adjustment slot 213 in the angled body of the second clamping member 191 from the inboard surface of the second clamping member 191. The portion of the coach bolt that has a square cross-section passes through the slot 213 and is able to slide within the slot 213. The portion of the coach bolt that has a rounded cross-section is threaded and passes through an adjustment aperture 203 in the first clamping member 191. The clamp actuating means 221, in the form of a nut, two load knob, or other suitable fastener is then engaged with the fastener. In one form, a two-load knob engages with the threaded end of the coach bolt that projects through the attachment aperture 203. Thus, the fastener and coach bolt arrangement can be used to tighten the clamp actuating means, thereby causing the first and second clamping members 191, 192 to be urged together to clamp onto a rail positioned in between.

Because the body of the second clamp member is angled toward the leg, as the clamp members 191, 192 are urged together, the second clamp member is pulled upwardly in the y direction with respect to the leg, so that the top clamping surface of a flange 212 on the second clamping member 192 is pulled upwardly to clamp against the lower surface of an overhanging lip of a roof rail. Therefore, the clamp actuating means can be tightened or loosened to tighten or loosen the rail mounting system accordingly.

In use, the flange 201 of the first clamping member 191 is placed on top of the rail whilst the flange 212 of the second clamping member 192 is placed in contacting relationship with the lower surface of the (inboard facing) overhanging lip of the rail. The roof rack assembly comprising a rail mounting system clamps onto the rail by using the clamp actuating means 221 to urge the first flange 201 towards the second flange 212 to clamp the roof rack to the rail. Similarly the rail mounting system can detach from the rail by using the clamp actuating means to urge the first and second flanges 201,212 away from each other.

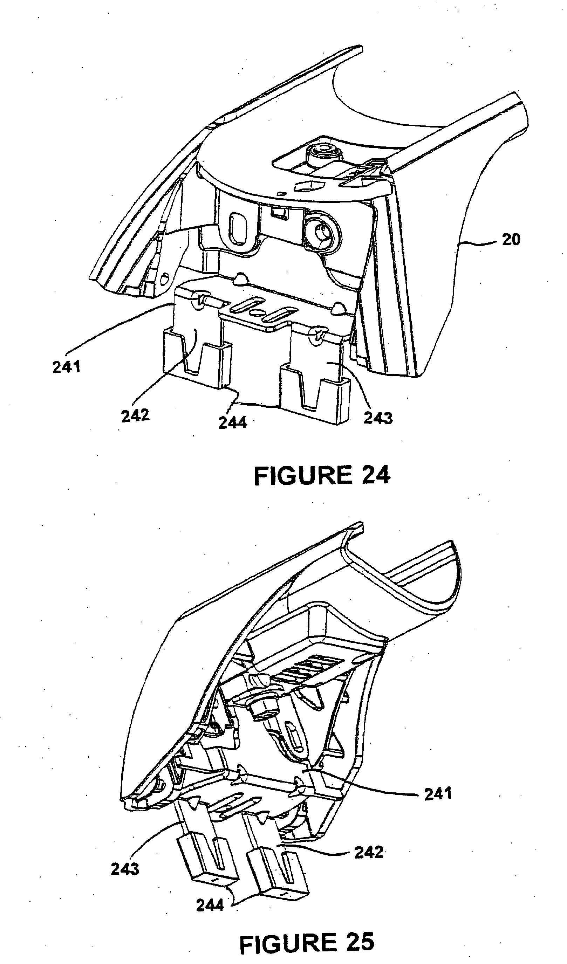

The leg of the present invention can also be attached to a trapdoor mounting system to attach the leg to a trap door mount. Figures 24 to 27 show alternative perspective views of varying portions of a leg assembly adapted for coupling to the roof of a vehicle through a trapdoor provided in ditches on roofs of vehicles, as is well known in the art. In such arrangements, the vehicle roof includes a ditch over which is positioned a trapdoor, which can be opened and through which a roof rack may be attached to the vehicle roof. As with all of the embodiments, the leg 20 of the roof rack is the same.

The embodiment of Figures 24 to 27 includes a load plate 241 which takes the place of the first clamp member 191 of the embodiment of Figures 19 to 23. The load plate 241 includes a body having an upper locating portion that comprises a leg attachment means in the form of an aperture 245 that aligns with the attachment means (aperture 32 and nut 30) in the leg 20. The load plate 241 also includes side portions comprising locating slots 246 that engage with locating slots 31 in the leg. Thus, the load plate 241 is configured to be attached to the leg 20 in the same way as the first clamping member 191, and as described above.

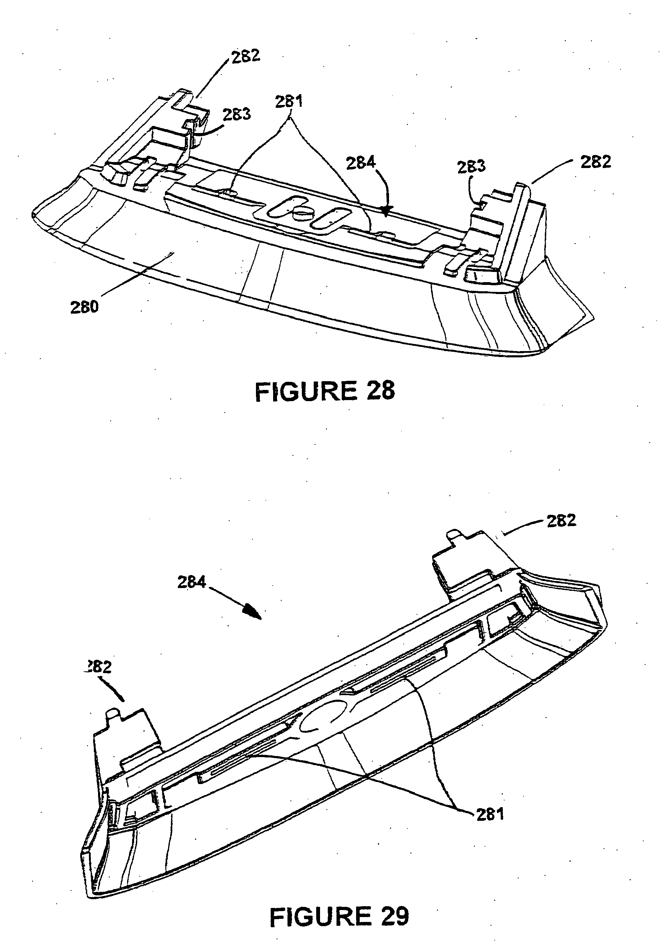

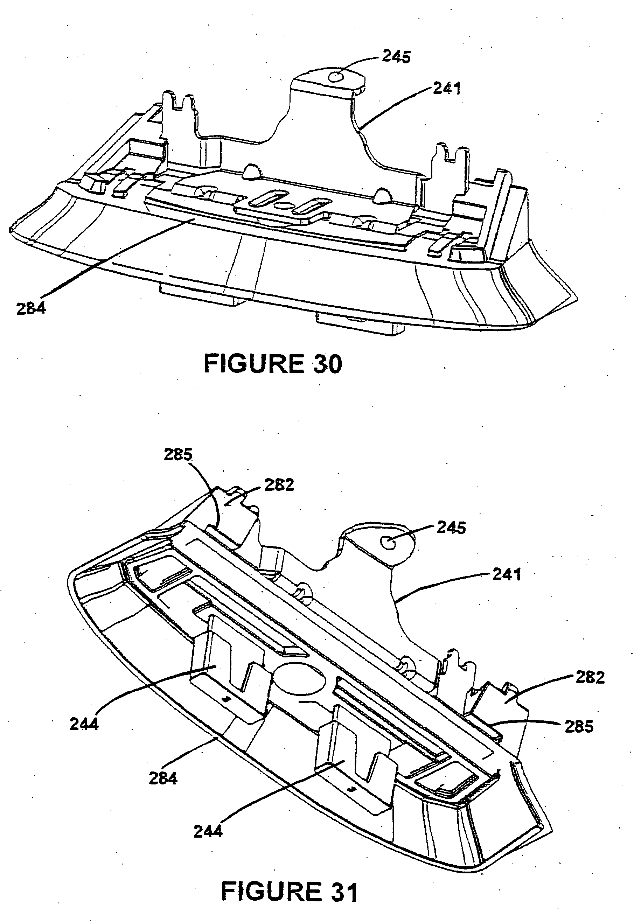

The load plate 241 also comprises foot attachment means in the form of two projecting side arms 248. Two side walls 249 are located between the side arms 248 and locating slots 246. The load plate 241 attaches to a foot 284 (as shown in Figures 28 to 31) by positioning the side arms 248 within load plate attachment means in form of recesses 285 in the foot (see Figure 31) and by positioning the side walls 249 within slots 283 (see Figures 28 and 30)in the foot 284. However, the foot and load plate may, alternatively, include other means by which the parts can be attached together.

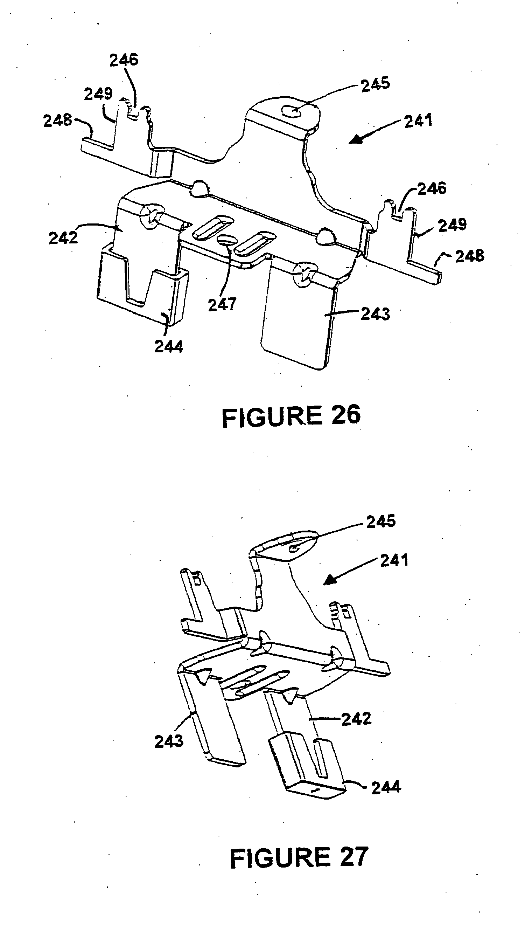

The load plate 241 also comprises at least one projection 242, 243. In a preferred form the load plate comprises first and second projecting stilts 242, 243, respectively, which may each be provided with extension means in the form of a boot 244 (only one boot 244 is shown in Figures 26 and 27). First and second projecting stilts 242, 243 are configured to project through the trapdoor opening and into the gutter and the boots 244 are configured to rest on the bottom, or at least on a supporting surface, of the gutter. Note that, unlike the embodiment of Figures 19 to 23, the assembly does not include a second clamp means because the locking force is provided inside the trapdoor fixing, as would be apparent to one of skill in the art.

Ditches on different vehicles may have different depths. Furthermore, some trapdoors are not removable from the vehicle and may stand upward from the vehicle roof, creating an obstruction between the vehicle roof and the leg of the roof rack. Therefore, a mounting kit for a trapdoor mount may include specific boots 244 adapted to fit over the ends of the stilts to increase the effective length of the stilts. The boots are of various sizes to suit the differing depths of the ditches and the differing heights of projecting open trapdoors for specific vehicles. The stilts and boots together are adapted to compensate for the height of any projecting trapdoor and the depth of the ditch.

Typically, the boots are made of a soft material so as not to damage the paintwork on the vehicle with which they come into contact. For example, the boots may be made from rubber or a soft plastic.

The soft boots are configured to slide onto first and second projecting stilts 242, 243 and rest on the bottom of the ditch. The ends of the first and second projecting stilts 242, 243 abut with the inner floor of the soft boots. The soft boots 244 may have a base portion that extends below the floor of the soft boots, such that the bottom edge of each soft boot is substantially lower than the floor of each soft boot and, therefore, substantially lower than the ends of the first and second projecting stilts 242, 243. In effect, the boots extend the effective length of the stilts and increase the overall height of the mounting system. This means that if the vehicle has a deep ditch and/or a trapdoor that extends upwardly from the roof and cannot be removed, creating a distance between the leg of the roof rack and the floor of the ditch, a pair of soft boots with a deeper base portion can be used, whilst the same form of load plate 241 can be used with all trapdoor mounting kits.

It is envisaged that soft boots having base portions at three different heights may be provided to satisfy most ditch depths, and the heights of most projecting trapdoors when open, in vehicles.

The load plate 241 of the trapdoor mounting kit includes a mounting aperture 247, through which is located a bolt, or other suitable fixing means, to attach the load plate 241, to the roof of a vehicle via the trapdoor, thereby attaching the roof rack and leg to the vehicle roof. Typically, the ditch includes a rivnut or similar attachment receiving means. The stilts of the trapdoor mounting system are positioned in the ditch via the opening provided by the trapdoor such that the mounting aperture 247 in the load plate 241 is aligned with the rivnut, and an attachment adjustment means, such as a bolt, screw, two load knob in combination with a fastening means, or other suitable fixing means, is positioned through the aperture and rivnut and secured to the ditch to attach the load plate to the vehicle.

Figures 28 and 29 show alternative perspective views of the foot for the trapdoor mounting system for use as an interface between the load plate 241 and the ditch of the vehicle. As can be seen, the foot 284 includes a peripheral edge with a skirt 280 extending below the edge to hide the coupling between the roof rack leg and the ditch. Typically, the skirt is made from a resilient, flexible material, such as rubber, for example. The skirt 280 makes the coupling more aesthetically pleasing and also reduces air traps, especially where the trap door creates a distance between the leg of the roof rack and the floor of the ditch.

Figures 30 and 31 show the foot in position with the load plate 241. As can be seen, the stilts 242, 243 are inserted through slots 281 provided in the foot 284. Protruding edge portions 282 of foot 284 are configured to fixedly engage with a lower internal portion of the arms 21 a, 21 b of the leg 20.

Although the load plate and foot are described as two separate parts, it is envisaged that the load plate may be of a suitable form to be attached directly to the trapdoor mount without the need for a foot to be attached in between.

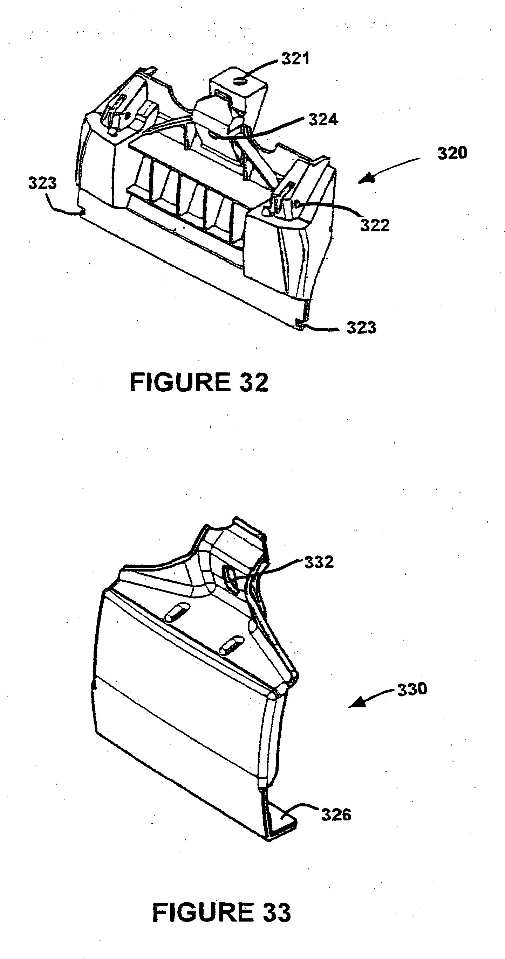

The leg of the present invention can also be attached to a gutter mounting system to attach the roof rack to a vehicle via a gutter on the vehicle roof. Figures 32 and 33 show key components of an assembly for a gutter mounting system that includes a foot 320, a clamping member 330, and, optionally, a foot pad (not shown).

Figure 32 shows a foot 320 for the gutter mounting system. The foot includes a leg attachment means in the form of an aperture 321 that aligns with aperture 32 and nut 30 in the leg 20, such that the foot 320 attaches to the leg 20 in the same way as for the load plates in the rail mounting system and trapdoor mounting system as described above. More particularly, the foot 320 also includes an adjustment aperture 324 that aligns with adjustment aperture 332 on the clamp 330, shown in Figure 33.

Additionally, the foot 320 includes locating holes 322 that align with holes 28 on the leg 20. Instead of using pins to attach the foot 320 to the leg 20, it is preferred to use screws that engage with locating holes 322 and holes 28 on the leg, in the same way that the pins 121 engaged with the foot 90 and the leg 20 for the mounting systems as described above. However, it is envisaged that pins could, alternatively, be used.

The bottom of the foot 320 comprises side edges, each with a recessed portion 323 to create a lip at the bottom edge of the foot 320. A foot pad (not shown) may be attached to the foot 320 by hooking into the recessed portions 323 to give friction inside the gutter, thereby reducing slippage of the roof rack when attached to the gutter. Preferably, the foot pad is rubber.

The inboard face of the foot 320 includes a flanged nut that is pressed against the inboard face and aligns with the aperture 324. An attachment adjustment means in the form of a bolt, screw, two load knob in combination with a fastening means for example, or other suitable fixing means is positioned through aperture 332 and aperture 324 and engages with the flanged nut. Tightening of the attachment adjustment means urges the clamp 330 towards the foot 320, whilst loosening the attachment adjustment means urges the clamp 330 away from the foot 320.

In use, the clamp is placed down the outside of the gutter and the flange 326 of the clamp hooks over the gutter and engages with a supporting edge in the gutter of the vehicle.

The fixing means is then tightened so that the clamp is urged toward the foot, thereby clamping onto the supporting edge of the gutter to attach the roof rack to the vehicle.

In a preferred form, the vehicle contacting face of the flange 326 may include a rubber surface or other soft surface to prevent the clamp from damaging the paintwork on the vehicle.

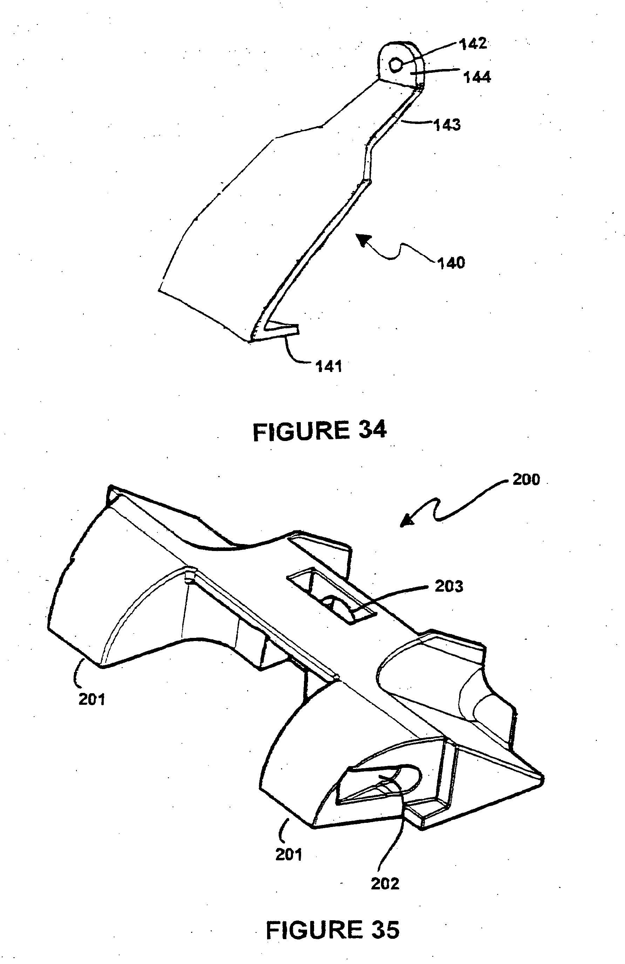

The leg of the present invention may also be used with a clamp mounting system for clamping the roof rack to the door sill of a vehicle. The clamp member 140 of a clamp mount is shown in Figure 34. In this embodiment, the same foot 90, as shown in Figure 9, and the same foot pad 80, as shown in Figure 8, is used with the mounting means. However, a clamp block 200 replaces clamp block 100. Clamp block 200 is shown in Figure 35.

Clamp block 200 comprises a pair of housings 201 that house protrusions 94 in foot 90 when the foot 90 is attached to the clamp block 200. The lower surface of clamp block 200 comprises foot attachment means profiled so that the clamp block 200 clips over the foot 90 and attaches to the foot by a snap fit arrangement. The pins 121 extend through apertures 93 in the foot 90, through apertures 202 in the clamp block 200, and through apertures 28 in the leg 20 to attach the foot, clamp block, and leg together.

The foot 90 includes a recessed portion 95 on its inboard face, as shown in Figure 9. The clamp 140 comprises a neck 143 that is adapted to slide through recessed portion 95 in the foot 90. Clamp block 200 is positioned on top of the foot 90 such that the neck 143 of the clamp 140 is positioned between the recessed portion 95 of the foot and the lower surface of the clamp block 200.

The outer wall 84 of the foot pad 80 also has a recess 85 in its upper edge, as shown in Figure 8. That recess 85 allows the clamp neck 143 of the clamp 140 to pass between the recess 85 so that the clamp 140 can be slid between the pad foot 80 and the leg 20 unhindered by the edge of the foot pad 80, when the leg is being mounted to a vehicle using a clamp mount 140.

The clamp block 200 has an inboard surface through which is located a clamp attachment means in the form of an aperture and a threaded nut 203, part of which can be seen in Figure 35. The upper attachment portion 144 of the clamp 140 includes an attachment aperture 142. The clamp 140 is positioned within the clamp block 200 so that the aperture 142 aligns with the threaded nut 203. An attachment adjustment means, or fastening means, such as a bolt, screw, or two load knob in combination with a fastening means for example, is then used to attach the clamp to the clamp block 200.

Preferably, the fastening means is a screw placed against the outboard surface of the upper attachment flange 144 of the clamp 140. The shank of the screw projects through aperture 142 and engages with threaded nut 203 fixed to the clamp block 200.

Preferably, the surface of the clamp block, against which the attachment portion 144 is placed, (the attachment surface) is angled so that tightening the attachment adjustment means causes the clamp 140 to be urged upwardly toward the clamp block 200, Loosening the attachment adjustment means causes the clamp 140 to be moved away from the clamp block.

The clamp 140 has an engagement edge positioned on a hooking return flange 141 that hooks into and pushes against a supporting surface in the door sill of a vehicle, thereby attaching the roof rack to the vehicle when the fastening means, projecting through the aperture 142, and the threaded nut 203 is tightened.

The roof rack leg of the invention can also be attached to another type of rail mounting system to attach to a flush rail on a vehicle roof according to one embodiment of the invention. This type of rail mounting system includes a foot 60 and a clamping member 70.

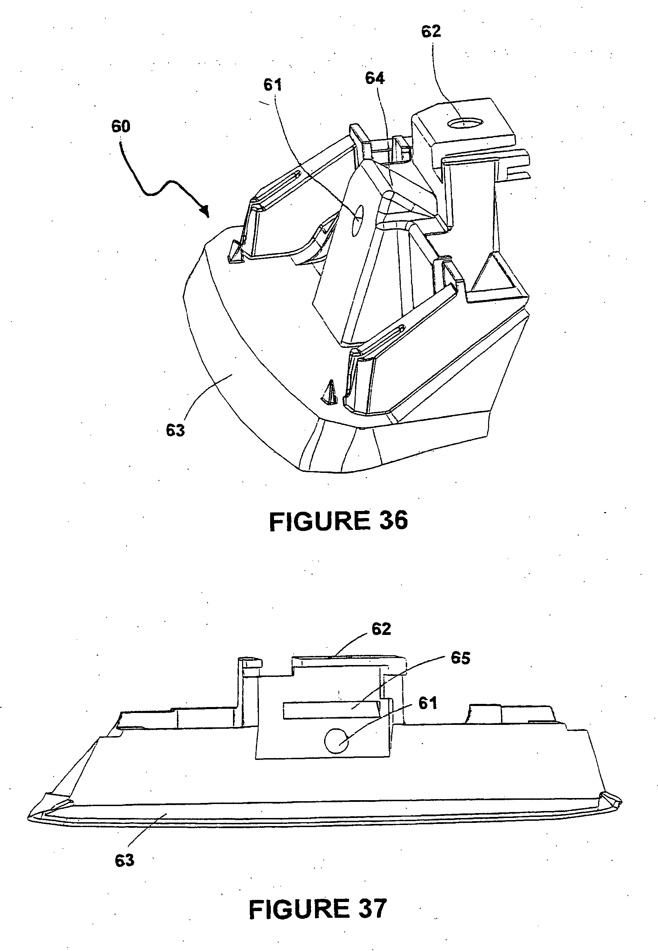

Figure 36 shows one form of foot 60 that includes a main body having a clamp member 70; attachment means 61 by which to attach a clamp member to the foot; a leg attachment means 62 by which to attach the foot to a roof rack leg; a skirt 63 surrounding at least a portion of the base of the foot body; and a clamp member adjustment means comprising a guide 64 and receiving means 65 (see Figure 37).

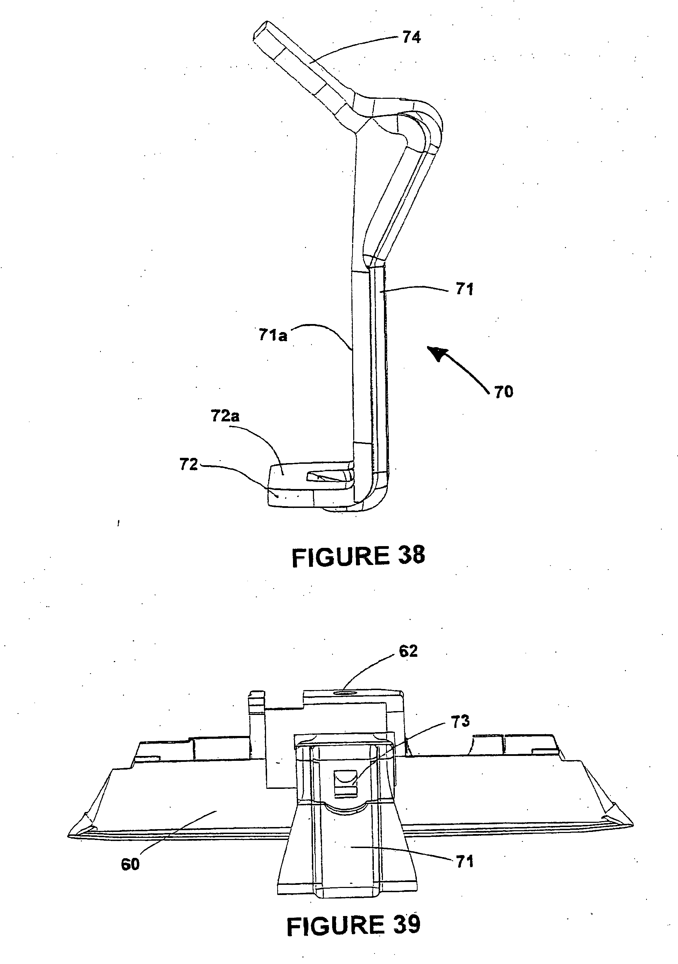

As shown in Figure 38, the clamp mounting system includes a clamp member 70 for engaging with the foot 60. The foot 60 and clamp member 70 provide a clamping means by which the leg 20 of a roof rack can attach to the roof rail of a vehicle.

The clamp mounting member 70 includes a body portion 71 having a first clamping surface 71 a and a base portion or hook 72 having a second clamping surface 72a. The clamp mounting member 70 also includes an attachment means 73 (see Figure 39) and a clamp adjustment portion 74 that co-operates with the attachment means to adjust the position of the clamping member relative to the foot.

In a preferred form, the attachment means 73 comprises an aperture for aligning with a corresponding attachment means 61 on the foot 60. A fixing means, such as a bolt, screw, or other suitable means can be used to attach the clamping member 70 to the foot 60. However, it will be appreciated that the clamp mounting system could, alternatively, comprise other means for attaching the clamping member 70 to the foot 60, as would be readily apparent to a person skilled in the art.

Before attaching the clamping member 70 to the foot 60, the clamp adjustment portion 74 is fed through clamp receiving means 65. The clamp receiving means 65 is an aperture that is dimensioned to be slightly larger than the clamp adjustment means 74 to allow the adjustment portion 74 to slide therethrough, but is small enough so that the adjustment portion cannot slop or skew within the receiving means 65. Preferably, the adjustment portion 74 is in the form of an upwardly sloping plate-like neck and the receiving means is in the form of a slot. However, other shapes could, alternatively, be used. For example, the adjustment portion could be a rod for mating with a receiving aperture shaped to accommodate the rod.

Once the adjustment portion 74 is fed through the receiving means 65, the adjustment portion is guided to various positions by guide means 64. In effect, as the adjustment portion 74 is pushed further through receiving aperture 65, the adjustment portion slides along the guide means, which comprises a sloping surface, to pull the clamping member 70 closer to the foot 60, to a desired clamping position. Conversely, partially retracting the adjustment portion from the guide means will serve to urge the clamping member 70 away from the foot 60. Preferably, the guide means is an upwardly sloping guide plate, but an upwardly sloping channel or tunnel could, alternatively, be used.

It is envisaged also, that the adjustment arrangement could be used in reverse. For example, if the adjustment portion were downwardly sloping, the guide means would also be downwardly sloping so that if the adjustment portion is pushed further along the guide means, the clamping member would be urged away from the foot, whereas if the adjustment portion was partially retracted from the guide means, the clamping member would be pulled closer to the foot.

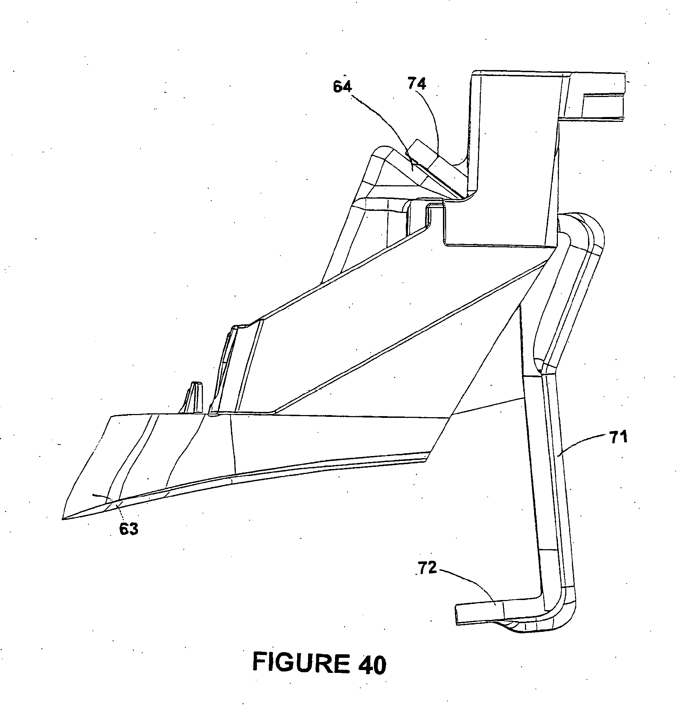

See Figures 39 and 40 that show the clamping member 70 in position with the foot 60. For clarity, the fixing means to attach the two members together is not illustrated.

The foot 60 is attached to the leg of a roof rack using leg attachment means 62. Preferably, the leg attachment means 62 is an aperture positioned on the foot to align with mounting system receiving means 30, 32 on the leg. Preferably, the mounting system receiving means 30, 32 is also an aperture. A fixing means, such as a screw, bolt, or other suitable fixing projects through the apertures 62 and 32 to attach the foot to the leg 20, as would be readily apparent to a person skilled in the art.

It will be appreciated that leg attachment means 62 and mounting system attachment means 30, 32 could take on other forms to attach the foot to the leg of the invention. For example, a plug socket arrangement could be used on a snap fit means of attachment could be used as would be apparent to a person skilled in the art.

In use, the foot 60 is attached to the leg 20 of a roof rack via mounting system attachment means provided on the leg and corresponding means provided on the foot. The leg and foot combination are then placed on top of the respective rail mount on a vehicle roof so that the skirt 63 of the foot 60 sits over and at least partially surrounds the outboard edge of the rail.

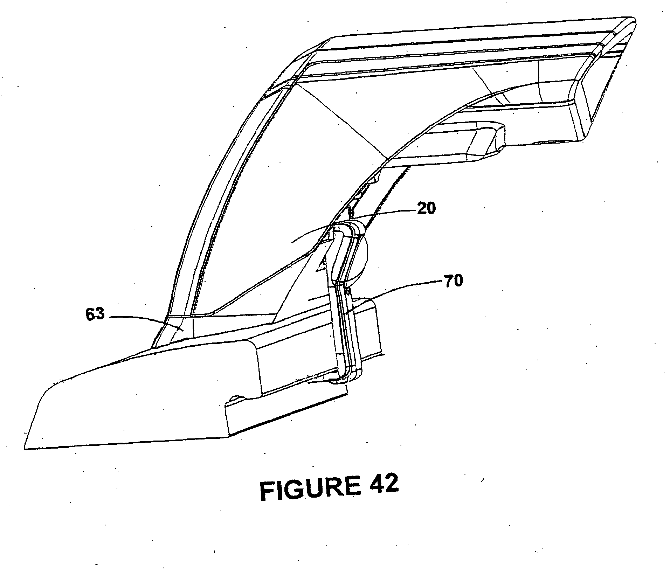

A user then positions the clamping member 70 on the foot 60, such that the clamp adjustment portion or neck 74 is fed through the receiving slot 65 of the foot 60. The user moves the clamp adjustment neck 74 along guide plate 64 until first clamping face 71 a abuts the inbound edge of the rail (the edge facing the opposing rail) and the second clamping face 72a abuts a lower surface of the rail so that the body 71 and bottom portion 72 of the clamping member 70 hook around the inboard-facing overhang of the rail, as shown in Figure 42. Once the clamping member 70 is tightly hooked around the rail, the clamping member 70 is attached to the foot 60 via clamp attachment means 61 and 73 and is secured in position.

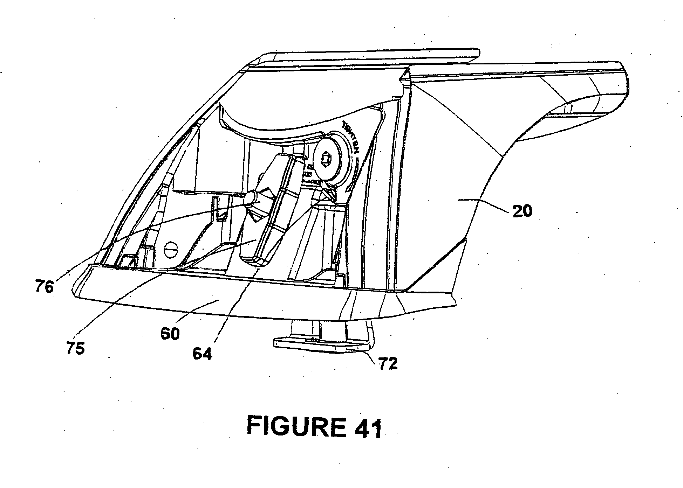

Both Figures 41 and 42 show the clamping member 70 attached to a foot 60 by aligning the attachment apertures 61 and 73 and threading a bolt 76 therethrough. The bolt is engaged with a tightening means in the form of a two-load knob 75 that allows a user to easily tighten and loosen the clamp mounting system to attach or detach the system to and from a roof rail. Typically, for the embodiment shown in Figures 36 to 42, as the two-load knob is tightened, the clamping member 70 is urged toward the foot 60 causing the adjustment neck 74 to move upwardly along the guide 64, thereby pulling the base portion 72 and second clamping face 72a of the clamping member upwardly against the overhang of the rail. Conversely, loosening the two-load knob causes the clamping member 70 to move away from the foot 60, causing the adjustment neck 74 to partially retract from the guide 64, thereby allowing the base portion 72 of the clamping member to move further away from the leg 20.

In effect, the guide plate 64, receiving slot 65, adjustment neck 74, bolt or shaft 76 and tightening means 75 provide an adjustment means by which the position of the clamping member can be adjusted relative to the foot.

Thus, this form of mounting system allows for the roof rack leg to be attached to a flush rail on a vehicle roof and allows for the clamping means to be easily adjusted to compensate for rails of different sizes by moving the clamping member 70 away from the leg 20 for larger rails and toward the leg 20 for smaller rails.

The roof rack leg of the invention can also be attached to a raised rail mounting system which allows a roof rack to be attached to a rail mount on a vehicle where the bottom of the rails is distanced from the vehicle roof, thereby providing a space between the rails and the roof.

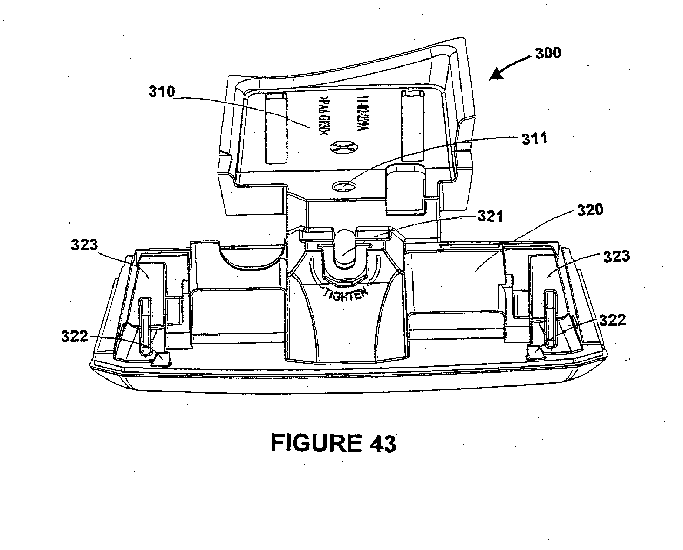

Figure 43 shows one form of foot 300 that can be used with a raised rail mounting system. The foot 300 is adapted to be attached to a roof rack leg 20 according to the invention and to an adjustable clamping member 340. The combination of the foot, leg and clamping member provide a means for clamping onto surfaces of a raised rail, thereby securing a roof rack to the rail.

The foot 300 of the raised rail mounting system comprises an upper portion 310 and a base portion 320. Preferably, the upper portion 310 is shaped to fit around the crossbar housing or to fit around the lower portion of a crossbar when attached to the leg of the roof rack. In the embodiment shown in Figure 43, the upper portion 310 of the foot is shaped to fit snugly around a crossbar housing having a lower surface that substantially follows the contours of a crossbar having an aerodynamic profile.

The upper portion 310 of the foot has an attachment means 311 for attaching the foot to the roof rack leg 20. In a preferred form, that attachment means is an aperture 311 that aligns with attachment aperture 32 and nut 30 on the leg and is adapted such that the foot and leg can be connected together via a fixing means, such as a nut and bolt arrangement, or the like, projecting through the attachment aperture 311, 32 and nut 30.

Although the attachment means 311 is provided as an attachment aperture, it is envisaged that other suitable attachment means may, alternatively, be used. For example, a plug and socket type arrangement may be used to attach the foot 300 to the leg 20.

The base portion 320 of the foot 300 includes a slot 321 that comprises part of a clamp adjustment system to be described later.

The base portion 320 of the foot also includes additional means by which to attach the foot to the leg. In particular, protrusions 323 project from the base portion 320 and correspond with apertures or recesses in the bottom of the arms/supports 21a, 21 b in the base of the leg 20.

The protrusions 323 and corresponding recesses in the leg 20 help to attach the foot 300 to the leg 20 without skewing. The protrusions may, optionally, be dimensioned and shaped to provide a snap-fit arrangement with corresponding apertures or recesses in the leg 20.

The base portion of the foot may also include one or more lugs 322 for mating with corresponding recesses or apertures in the leg 20 to guide the foot 300 into the correct position with respect to the leg 20 and to prevent the foot 300 from skewing relative to the leg 20. In the preferred form, the lugs 322 engage with corresponding recesses on the inner opposing faces of the supports 21a, 21 b on the leg 20.

In an alternative arrangement (not shown), the base portion 300 includes one or more housings or recesses for receiving one or more lugs positioned on the roof rack leg 20.

Figure 34 shows another view of the foot 300 in which the inside face of the base portion 320 of the foot can be seen. The inside face forms a first clamping surface 324 for clamping onto a roof rail as will be described later.

Also shown in Figure 34 is the inboard end of the upper portion 310 of the foot 300. The upper portion 310 includes means for directly or indirectly attaching to a clamping member.

In a preferred form, the clamping member attachment means comprises a slot or receiving means 325, which is adapted to receive a clamp adjustment guide member 330, which is in turn attached to a clamping member to indirectly attach the clamping member to the foot 300. However, it is envisaged that the receiving means 325 and clamping member may be adapted such that the clamping member is directly attached to the foot 300 via the receiving means 325 as would be readily apparent to a person skilled in the art.

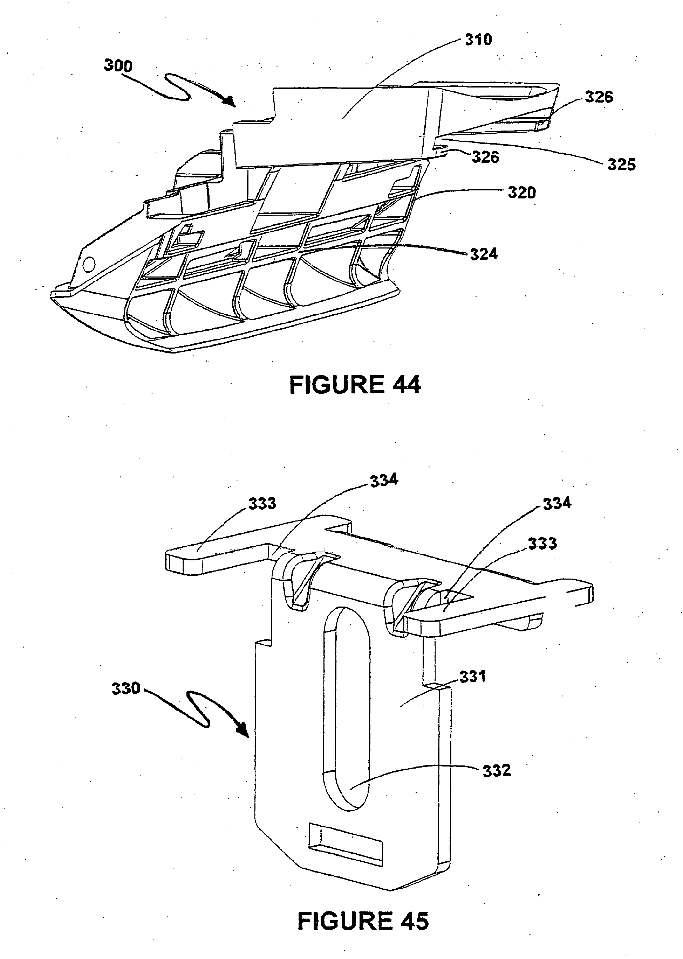

In the embodiment shown in Figure 44, the receiving means 325 comprises a pair of opposing rails 326 (or an open-sided slot), to engage with a clamp adjustment guide member.

Figure 45 shows a clamp adjustment guide member 330 having a body 331, a longitudinal opening or slot 332, and a pair of connectors 333 in the form of arms. The guide member also includes a clamp support receiving means preferably in the form of an opening 334 formed between the connector arms 333 and the body 331.

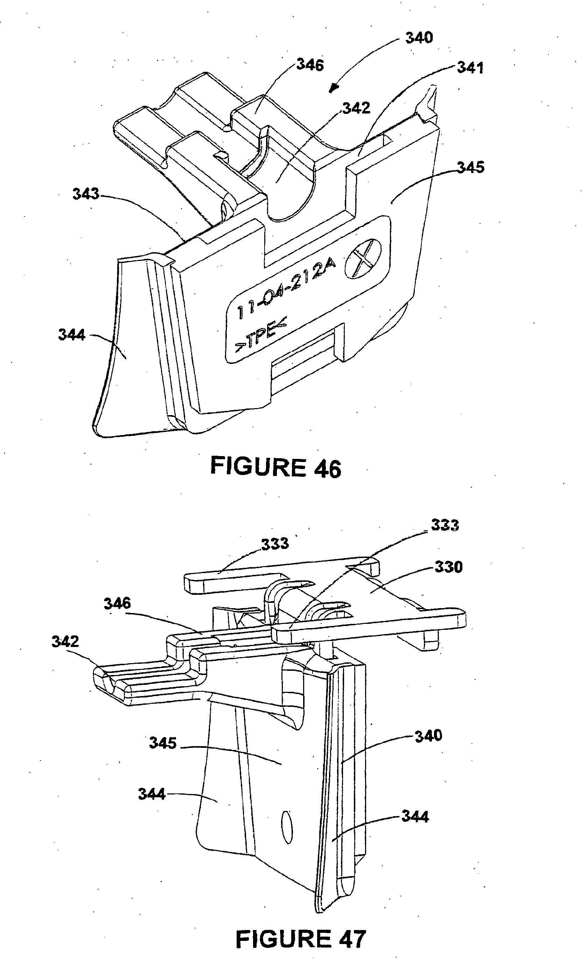

Figure 46 shows a clamping member 340 for use with the clamp adjustment guide member 330. The clamping member 340 includes a body 345 having an attachment means by which a clamp adjustment guide member 330 can attach to the clamping member 340. The attachment means comprises an opening in the form of a slot 341 through which the body 331 of the clamp adjustment member can be inserted. However, alternative ways of attaching the clamping member to the clamp adjustment member may be used as would be apparent to a person skilled in the art.

The clamping member 340 also comprises a tongue or support 346 that extends from the body 345 of the clamping member. The support 346 includes a channel 342 therein for supporting an adjustment rod (not shown) as will be described later.

The clamping member includes a non-clamping face and an opposing clamping face 343 which provides the second clamping face of the raised rail mounting system. Optionally, wings 344 extend from the sides of the clamping face. The wings are made of a flexible material that is suitable for gripping onto the roof rail to help stop the clamping member from slipping along the rail.

Figure 47 shows the body 331 of the clamp adjustment guide member 330 fitted into the body 345 of the clamping member via opening 341.

Although not shown, the longitudinal opening 332 of the clamp adjustment guide member aligns with the channel 342 on the clamping member.

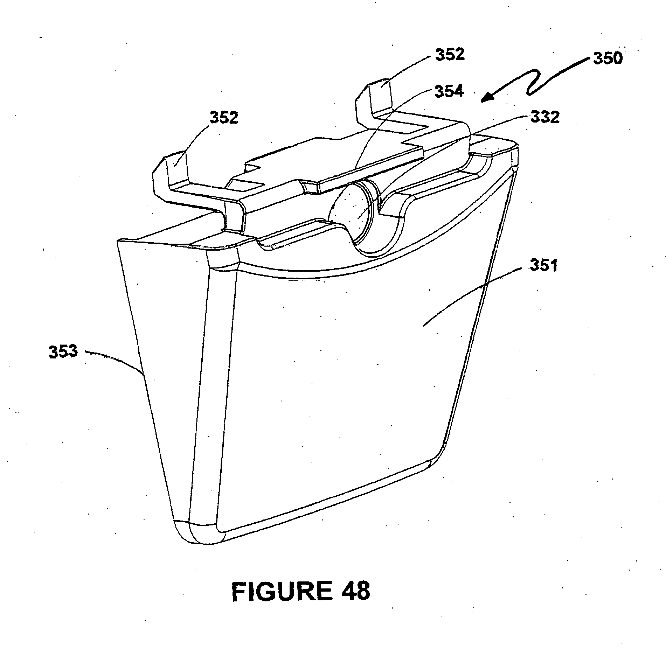

As shown in Figure 48, the clamp mounting system also, optionally, includes a clamp support 350 having a body 351, attachment means in the form of hooks 352, and a supporting surface 353 for abutting the non-clamping face of the body 345 of the clamping member 340.

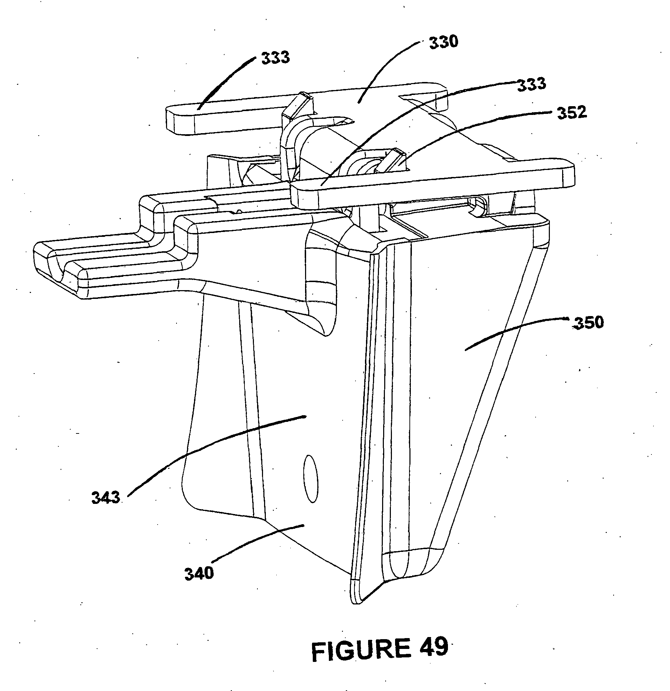

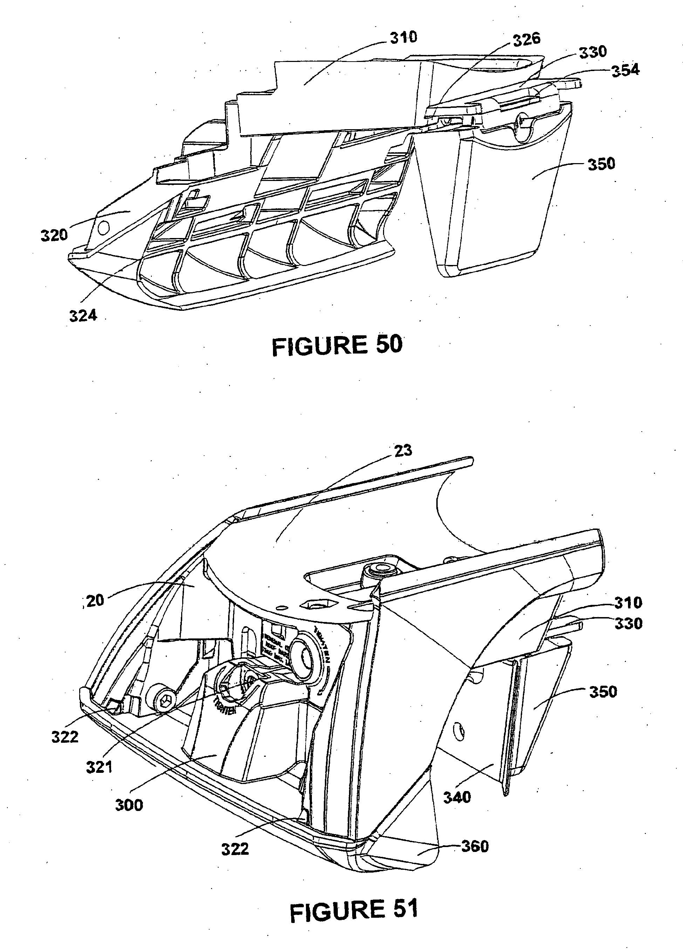

The clamp support attaches to the clamp adjustment guide member 330 via hooks 352 that project through openings 334 and via tongue 354 that engages with a tongue receiving means (not clearly shown) at the rear of the clamp adjustment guide member 330 (see Figures 49 and 50). It is envisaged that alternative ways of attaching the clamp support to the clamp adjustment guide member may be used.

Figure 50 shows the clamping member 340, clamp member support 350, and clamp adjustment guide member 340 attached to the foot 300 via connectors 333 that fit within the opening 325 defined by opposing rails 326 and the lower inboard surface of the upper portion 310 of the foot.

Figure 51 shows the foot 300, clamping member 340, clamp adjustment guide member 330, and clamp support 350 attached to a roof rack leg 20 of the invention.

As can be seen in Figure 51, the protrusions or spigots 323 of the foot fit within the base portion of the leg and are housed within the supports 21 a, 21 b of the leg. The lugs 322 fit within corresponding recesses in the leg 20. The protrusions 323 and lugs 322 help attach the foot 300 to the leg and stop the foot 300 from skewing relative to the leg 20.

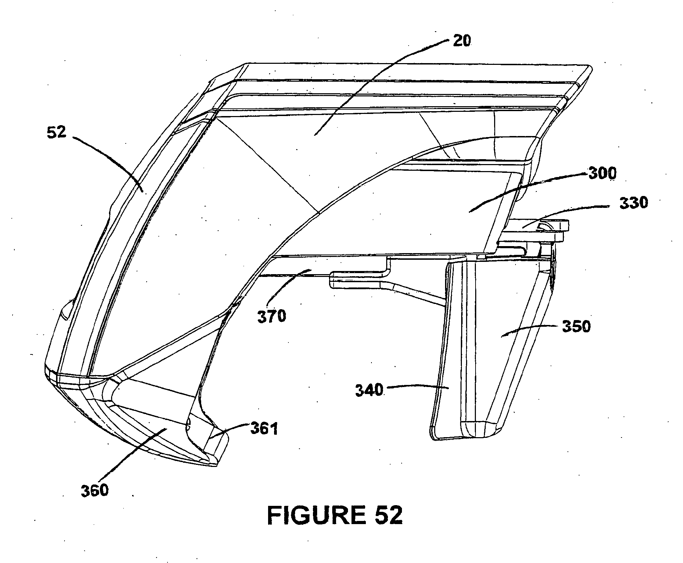

Figure 52 shows the arrangement of Figure 51 and also shows a skirt 360, leg cover, and adjustment means 370 in the form of a threaded shaft.

In use, the clamp adjustment guide member 330 is fitted within the clamping member 340 and both parts are then attached to the foot 300 by inserting the connectors 333 into the opening 325 as described above. The clamp support 350 is then, optionally, attached to the clamp adjustment guide member 330 as described above.

The foot 300 is then attached to the leg 20 so that protrusions 323 fit within the base of the leg; lugs 322 fit within locating recesses 29c, 29d on the leg, and the upper surface of the upper portion of the foot fits around the base of the crossbar housing (or crossbar, if applicable).

A bolt passes through attachment apertures 30, 32 in the leg 20 and attachment aperture 311 in the foot 300 and is fixed in position to attach the foot 300 to the leg 20.

An adjustment means, such as a threaded shaft is fitted within the slot 321 and rests within the channel 342 in the clamping member 340. The threaded shaft projects through slot 332 in the clamp adjustment guide 330. The shaft is fastened in place so that the shaft can rotate around its longitudinal axis but cannot be removed from the attached component parts of the clamp mounting system.

The channel 342 in the clamping member 340 preferably includes an adjustment receiving portion comprising a collar that fits within the channel and has a threaded annular interior for engaging with the threaded shaft 370. The collar at least partially projects through slot 332 in the clamp adjustment guide member. A nut, or other end of the shaft and abuts the inboard face of the clamp adjustment guide member.

In an alternative arrangement, the channel 342 is replaced with a tunnel or aperture having a threaded interior for engaging with the threaded adjustment shaft 370.

A nut or toggle is attached to the adjustment shaft 370 at the outboard face of the leg 20 where the adjustment shaft 370 projects from aperture 321.

Thus, by rotating the toggle in one direction, the shaft 370 retracts via the aperture 321 in the foot and, in turn, urges the clamping member, clamp adjustment guide member, and clamp support toward the leg 20 of the roof rack by causing the connectors 333 on the clamp adjustment guide member 330 to be slid further into receiving means 325. Conversely, turning the toggle in the opposite direction causes the clamping member, clamp adjustment guide member and clamp support to move away from the roof rack leg, and the connectors 333 are caused to partially retract from receiving means 325 accordingly.

The hooks 352 of the clamp support 350 abut with an inner surface of the upper portion 310 of the foot 300 in the maximum extension position to prevent the connectors 333 from fully retracting from the receiving aperture 325. This is a safety feature.

Therefore, by rotating the toggle, a user can cause the clamp adjustment means to move the clamping member 340 toward or away from the leg 20 to account for roof rails having different widths.

The leg 20 and foot 300 are also preferably fitted with a skirt 360 having a hooked bottom portion 361 for hooking underneath a roof rail. The skirt is preferably made of a gripping-type material that helps stop the hooked bottom portion from sliding along the roof rail.

Once the components of the clamp mounting system are fitted together and attached to the crossbar and corresponding leg and mounting components, the clamping member is adjusted to its maximum extension position, in which the clamping member is farthest away from the first clamping surface of the foot. The mounting system on each roof rack leg is then fitted over a respective roof rail such that the first clamping surface 324 abuts the outboard surface of the roof rail and the hooked bottom portion 361 is brought into contact with the underside of the roof rail.

The clamp adjustment means is then used to urge the clamping member 340 toward the inboard surface of the roof rail until the inner face 343 of the clamping member (the second clamping surface of the clamp mounting system) is tightly pressed against the inboard surface of the roof rail, thereby clamping the roof rack leg to the roof rail.

If the clamping member needs to be moved away from the upper portion of the foot to more effectively clamp onto the roof rail, the adjustment means 370 can be moved downwardly along adjustment slot 321 causing the adjustment means support 346 and, consequently, the body 345 of the clamping member 340 to slide downwardly. This causes the clamp adjustment guide member to partially retract from the attachment means 341 in the clamping member 340.

Thus, the clamping member can be moved in the x-direction and in the y-direction with respect to the foot, so that the clamp mounting system can be adjusted to attach to roof rails of differing widths and of differing depths.

Once the roof rack leg of the present invention has been attached to the appropriate mounting system by which the roof rack is to attach to a vehicle, a leg cover can be fitted over the leg. In the preferred form, the leg and leg cover are adapted to be locked together as described above. This means that the attachment adjustment means of the various mounting systems, which is typically located between the leg of the roof rack and the leg cover, cannot be accessed without unlocking the leg cover from the leg. Therefore, it is not possible to detach the roof rack from the vehicle without first unlocking the leg cover from the leg. Therefore, the leg, leg cover, and mounting systems of the invention provide a roof rack that can be securely attached to a vehicle.

## Claims

1. A leg for a roof rack, the leg being adapted to be attachable to a plurality of different mounting systems by which to attach the leg (20) to a vehicle;
wherein the leg (20) comprises a pair of supports (21a, 21b) joined by a bridge (27), the bridge (27) supporting a crossbar housing (23) having a profile shaped to fit a crossbar for the roof rack and at least one open side through which the crossbar can slide, the crossbar housing (23) further including overhanging opposing lips (24a, 24b) extending from two closed opposing sides and defining an opening therebetween;
the supports (21a, 21b) having opposing inner locating faces (29a, 29b), each locating face (29a, 29b) having a mounting system locating means in the form of a locating slot (31) for locating a selected mounting system in a correct position on the leg (20), and
wherein the leg (20) further includes attachment means in the form of an attachment aperture (30) against which is located a nut that provides the attachment aperture (30) with a threaded annular surface.

2. A leg for a roof rack according to any preceding claim, wherein the leg (20) is attached to a mounting system comprising a foot (90) having an opening (96) therein, the leg (20) having leg attachment means by which to attach the leg to a mount on a vehicle.

3. A leg for a roof rack according to claim 2, wherein the foot (90) comprises a peripheral edge (91) and foot pad receiving means (92), and wherein the foot is attached to a foot pad (80) having a periphery, an upper surface and a flexible lower surface; the foot pad having an opening (81) extending between the upper and lower surfaces and the foot pad comprising locating means (82) for engaging with the foot pad receiving means (92) to locate the foot pad (80) on the foot (90).

4. A leg for a roof rack according to claim 3, wherein the leg attachment means comprises an aperture and wherein the mounting system further comprises a clamp block (100) comprising an aperture (102) that aligns with an attachment aperture (32) on the leg (20) and aligns with the foot opening (96) and foot pad opening (81) through which a fixing means can project to attach to a mount on a vehicle, wherein the foot (90) comprises a pair of pin receiving apertures (93) and the clamp block (100) comprises pin receiving recesses (101) that align with the pin receiving apertures (93), and wherein the leg (20) comprises pin receiving recesses (28), through which a pin (121) is positioned to pivotably couple the foot (90) to the leg (20).

5. A leg for a roof rack according to claim 4, wherein the fixing means comprises a flanged mounting member adapted to engage with a track (150) on a vehicle to attach the leg (20)
to the vehicle and wherein the foot pad comprises a lower surface contoured to fit over the track (150).

6. A leg for a roof rack according to claim 1, wherein the leg (20) is attached to a mounting system comprising a first clamp member (191) and a second clamp member (192), and wherein the position of the second clamp member (192) with respect to the leg (20) is adjustable in the x-direction and the y-direction.

7. A leg for a roof rack according to claim 6, wherein the first clamp member (191) comprises a first clamping portion (201) and an adjustment aperture (203), and the second clamp member (192) comprises: a body having a slot (213) that aligns with the adjustment aperture (203), and having a second clamping portion (212) projecting from the body, wherein at least a portion of the body is angled toward the leg (20); and an adjustment member (211) that is adapted to removably engage with one of a plurality of openings (33) located on the leg (20); wherein the mounting system also comprises clamp actuating means (221) that engages with the adjustment aperture (203) and the slot (213) to urge the first and second clamp members (191 , 192) together or apart.

8. A leg for a roof rack according to claim 1, wherein the leg (20) is attached to a mounting system comprising a load plate (241) having a body from which projects at least one stilt (242, 243) adapted to fit within a trapdoor opening on a vehicle, and the load plate (241) further comprising means with which to attach the load plate (241) to a vehicle.

9. A leg for a roof rack according to claim 1, wherein the leg (20) is attached to a mounting system comprising a foot (320) and a clamp member (330), the foot and clamp member each comprising an adjustment aperture (324, 332) in alignment with each other; the mounting system further comprising an attachment adjustment means that projects through the adjustment apertures (324, 332), wherein tightening or loosening the attachment adjustment means causes the foot (320) and clamp member (330) to move toward or away from each other.

10. A leg for a roof rack according to claim 2, wherein the mounting system further comprises a clamp block (200), attached to the leg (20) and foot (90), and a clamp member (140) having an attachment portion (144) that is positioned adjacent to an attachment surface on the clamp block (200), the clamp member (140) having a hook (141) at or near its distal end; wherein the attachment surface and attachment portion (144) each comprise an aperture (142) through which is positioned an attachment adjustment means to attach the clamp member (140) to the clamp block (200), and wherein the attachment surface on the clamp block (200) is angled such that tightening or loosening the attachment adjustment means causes the hook (141) of the clamp member (200) to move toward or away from the clamp block (200).

11. A leg for a roof rack according to claim 1, wherein the leg (20) is attached to a mounting system comprising a foot (60) and a clamp member (70), attachment means (61 , 73, 75) by which to attach the clamp member (70) to the foot (60), and clamp member adjustment means (64, 65, 74, 75, 76) by which the position of the clamp member can be adjusted relative to the foot, wherein the clamp member (70) comprises an adjustment portion adapted to fit within an aperture (65) in the foot (60) and be guided into position by a guide (64) located on the foot (60), and wherein the clamp member (70) also comprises a hook (72) for hooking around a portion of a rail on a vehicle, and wherein the mounting system further comprises an adjustment means (76) adapted to cause the hook (72) to move toward or away from the foot (60).

12. A leg for a roof rack according to claim 1, wherein the leg is attached to a mounting system comprising a foot (300), a clamp adjustment guide member (330), and an adjustable clamp member (340) having a body (345) comprising engagement means that are adapted to engage with a clamp adjustment means; wherein the clamp adjustment guide member (330) comprises a body having a slot (332) therein and one or more connectors (333) projecting therefrom, each connector being in sliding engagement with an opening (325) in the foot (300); and wherein the body of the guide member is adapted to be slidingly engaged with an opening (341) in the clamp member (340); the mounting system further comprising clamp adjustment means moveably attached to the foot (300) and projecting through the engagement means of the clamp member (340) and the slot (332) to attach the clamp member and guide member to the foot (300), whereby the clamp member (340) can move in the x-direction and the y-direction with respect to the leg (20).

13. A roof rack comprising a leg for a roof rack according to any one of the preceding claims.

## Patentansprüche

1. Stütze für ein Dachgestell, wobei die Stütze angepasst ist, an eine Vielzahl von verschiedenen Montagesystemen, durch die die Stütze (20) an ein Fahrzeug anzubringen ist, anbringbar zu sein;
wobei die Stütze (20) ein Paar von Halterungen (21a, 21b), die durch eine Brücke (27) verbunden sind, umfasst, wobei die Brücke (27) ein Querträgergehäuse (23) trägt, das ein Profil aufweist, das geformt ist, einen Querträger für das Dachgestell anzubringen, und mindestens eine offene Seite, durch die der Querträger gleiten kann, wobei das Querträgergehäuse (23) ferner überhängende sich gegenüberliegende Lippen (24a, 24b) enthält, die sich von zweiten geschlossenen gegenüberliegenden Seiten erstrecken und eine Öffnung dazwischen definieren;
wobei die Halterungen (21a, 21b) sich gegenüberliegende innere Positionierungsflächen (29a, 29b) aufweisen, wobei jede Positionierungsfläche (29a, 29b) ein Montagesystem-Positionierungsmittel in der Form einer Positionierungsapertur (31) zum Positionieren eines ausgewählten Montagesystems in einer richtigen Position an der Stütze (20) aufweist, und
wobei die Stütze (20) ferner Anbringungsmittel in der Form einer Anbringungsapertur (30) enthält, gegen die eine Mutter angeordnet ist, die die Anbringungsapertur (30) mit einer kreisförmigen Gewindeoberfläche versieht.

2. Stütze für ein Dachgestell nach einem der vorstehenden Ansprüche, wobei die Stütze (20) an ein Montagesystem angebracht ist, das einen Fuß (90) umfasst, der eine Öffnung (96) darin aufweist, wobei die Stütze (20) ein Stützenanbringungsmittel aufweist, mit dem die Stütze an eine Befestigungsvorrichtung an einem Fahrzeug anzubringen ist.

3. Stütze für ein Dachgestell nach Anspruch 2, wobei der Fuß (90) eine periphere Kante (91) und ein Fußunterlage aufnehmendes Mittel (92) umfasst und wobei der Fuß an eine Fußunterlage (80), die eine Peripherie, eine obere Oberfläche und eine flexible untere Oberfläche aufweist, angebracht ist; wobei die Fußunterlage eine Öffnung (81) aufweist, die sich zwischen der oberen und unteren Oberfläche erstreckt, und die Fußunterlage Positionierungsmittel (82) zum Ineingriffkommen mit dem Fußunterlage aufnehmenden Mittel (92) zum Positionieren der Fußunterlage (80) auf dem Fuß (90) umfasst.

4. Stütze für ein Dachgestell nach Anspruch 3, wobei das Stützenanbringungsmittel eine Apertur umfasst und wobei das Montagesystem ferner einen Klemmblock (100) umfasst, der eine Apertur (102) umfasst, die mit einer Anbringungsapertur (32) an der Stütze (20) in Ausrichtung kommt und mit der Fußöffnung (96) und Fußunterlagenöffnung (81), durch die ein Befestigungsmittel ragen kann, um an eine Befestigungsvorrichtung an einem Fahrzeug angebracht zu werden, in Ausrichtung kommt, wobei der Fuß (90) ein Paar Stift aufnehmender Aperturen (93) umfasst und der Klemmblock (100) Stift aufnehmende Aussparungen (101) umfasst, die mit den Stift aufnehmenden Aperturen (93) in Ausrichtung kommen, und wobei die Stütze (20) Stift aufnehmende Aussparungen (28) umfasst, durch die ein Stift (121) positioniert wird, um den Fuß (90) schwenkbar an die Stütze (20) zu koppeln.

5. Stütze für ein Dachgestell nach Anspruch 4, wobei das Befestigungsmittel ein mit Flansch versehenes Montageglied umfasst, das angepasst ist, um mit einer Schiene (150) auf einem Fahrzeug in Eingriff zu kommen, um die Stütze (20) an das Fahrzeug anzubringen, und wobei die Fußunterlage eine untere Oberfläche umfasst, die profiliert ist, um über die Schiene (150) zu passen.

6. Stütze für ein Dachgestell nach Anspruch 1, wobei die Stütze (20) an ein Montagesystem angebracht ist, das ein erstes Klemmglied (191) und ein zweites Klemmglied (192) umfasst, und wobei die Position des zweiten Klemmglieds (192) in Bezug auf die Stütze (20) in der x-Richtung und der y-Richtung einstellbar ist.

7. Stütze für ein Dachgestell nach Anspruch 6, wobei das erste Klemmglied (191) einen ersten Klemmabschnitt (201) und eine Einstellungsapertur (203) umfasst und das zweite Klemmglied (192) Folgendes umfasst: einen Körper mit einem Schlitz (213), der mit der Einstellungsapertur (203) in Ausrichtung kommt, und mit einem zweiten Klemmabschnitt (212), der aus dem Körper hervorragt, wobei mindestens ein Abschnitt des Körpers hin zu Stütze (20) geneigt ist; und ein Einstellungsglied (211), das angepasst ist, entfernbar mit einer einer Vielzahl von Öffnungen (33), die an der Stütze (20) angeordnet sind, in Eingriff zu kommen; wobei das Montagesystem außerdem Klemmenaktivierungsmittel (221) umfasst, die mit der Einstellungsapertur (203) und dem Schlitz (213) in Eingriff kommen, um das erste und zweite Klemmglied (191, 192) zusammen oder auseinander zu drängen.

8. Stütze für ein Dachgestell nach Anspruch 1, wobei die Stütze (20) an ein Montagesystem angebracht ist, das eine Lastplatte (241) umfasst, die einen Körper aufweist, von dem mindestens eine Stelze (242, 243) hervorragt, die angepasst ist, innerhalb einer Klappenöffnung an einem Fahrzeug zu passen, und wobei die Lastplatte (241) ferner Mittel umfasst, mit denen die Lastplatte (241) an ein Fahrzeug anzubringen ist.

9. Stütze für ein Dachgestell nach Anspruch 1, wobei die Stütze (20) an ein Montagesystem angebracht ist, das einen Fuß (320) und ein Klemmglied (330) umfasst, wobei der Fuß und das Klemmglied jeweils eine Einstellungsapertur (324, 332) in Ausrichtung miteinander umfassen; wobei das Montagesystem ferner ein Anbringungs-Einstellungsmittel umfasst, das durch die Einstellungsaperturen (324, 332) hervorragt, wobei Festziehen oder Lösen des Anbringungs-Einstellungsmittels bewirken, dass der Fuß (320) und das Klemmglied (330) sich zueinander hin oder voneinander weg bewegen.

10. Stütze für ein Dachgestell nach Anspruch 2, wobei das Montagesystem ferner einen Klemmblock (200) umfasst, der an der Stütze (20) und dem Fuß (90) angebracht ist, und ein Klemmglied (140), das einen Anbringungsabschnitt (144) aufweist, der angrenzend an einer Anbringungsoberfläche an dem Klemmblock (200) positioniert ist, wobei das Klemmglied (140) einen Haken (141) an oder nahe seinem entfernten Ende aufweist; wobei die Anbringungsoberfläche und der Anbringungsabschnitt (144) jeweils eine Apertur (142) umfassen, durch die ein Anbringungs-Einstellungsmittel positioniert wird, um das Klemmglied (140) an den Klemmblock (200) anzubringen, und wobei die Anbringungsoberfläche an dem Klemmblock (200) derart schräg gestellt ist, dass Festziehen oder Lösen des Anbringungs-Einstellungsmittels bewirken, dass sich der Haken (141) des Klemmglieds (200) hin zu oder weg von dem Klemmblock (200) bewegt.

11. Stütze für ein Dachgestell nach Anspruch 1, wobei die Stütze (20) an ein Montagesystem angebracht ist, umfassend einen Fuß (60) und ein Klemmglied (70), Anbringungsmittel (61, 73, 75), mit denen das Klemmglied (70) an den Fuß (60) anzubringen ist, und Klemmglied-Einstellungsmittel (64, 65, 74, 75, 76), mit denen die Position des Klemmglieds relativ zu dem Fuß eingestellt werden kann, wobei das Klemmglied (70) einen Einstellungsabschnitt umfasst, der angepasst ist, innerhalb einer Apertur (65) in dem Fuß (60) zu passen und durch eine Führung (64), die an dem Fuß (60) angeordnet ist, in Position geführt zu werden, und wobei das Klemmglied (70) außerdem einen Haken (72) zum Haken um einen Abschnitt einer Schiene an einem Fahrzeug umfasst, und wobei das Montagesystem ferner ein Einstellungsmittel (76) umfasst, das angepasst ist, um zu bewirken, dass der Haken (72) sich hin zu oder weg von dem Fuß (60) bewegt.

12. Stütze für ein Dachgestell nach Anspruch 1, wobei die Stütze an ein Montagesystem angebracht ist, umfassend einen Fuß (300), ein Klemmeneinstellungs-Führungsglied (330) und ein einstellbares Klemmglied (340) mit einem Körper (345), umfassend Eingriffmittel, die angepasst sind, mit einem Klemmeneinstellungsmittel in Eingriff zu kommen, wobei das Klemmeneinstellungs-Führungsglied (330) einen Körper mit einem Schlitz (332) darin und einem oder mehreren Verbindungsvorrichtungen (333), die davon hervorragen, umfasst, wobei jede Verbindungsvorrichtung in Gleiteingriff mit einer Öffnung (325) in dem Fuß (300) steht; und wobei der Körper des Führungsglieds angepasst ist, mit einer Öffnung (341) in dem Klemmglied (340) gleitend in Eingriff zu kommen; wobei das Montagesystem ferner Klemmeneinstellungsmittel umfasst, die bewegbar an dem Fuß (300) angebracht sind und durch das Eingriffmittel des Klemmglieds (340) und den Schlitz (332) hervorragen, um das Klemmglied und Führungsglied an den Fuß (300) anzubringen, wobei sich das Klemmglied (340) in Bezug auf die Stütze (20) in der x-Richtung und der y-Richtung bewegen kann.

13. Dachgestell, umfassend eine Stütze für ein Dachgestell nach einem der vorstehenden Ansprüche.

## Revendications

1. Montant de galerie de toit, le montant étant adapté pour pouvoir être fixé à une pluralité de systèmes de montage différents permettant de fixer le montant (20) à un véhicule ;
le montant (20) comprenant une paire de supports (21a, 21b) joints par un pont (27), le pont (27) supportant un logement de barre transversale (23) au profil conformé pour s'adapter à une barre transversale de la galerie de toit et au moins un côté ouvert à travers lequel la barre transversale peut coulisser, le logement de barre transversale (23) comportant en outre des lèvres opposées en porte à faux (24a, 24b) partant de deux côtés opposés fermés et définissant une ouverture entre elles ;
les supports (21a, 21b) ayant des faces de positionnement internes opposées (29a, 29b), chaque face de positionnement (29a, 29b) ayant un moyen de positionnement de système de montage sous forme de fente de positionnement (31) pour positionner un système de montage sélectionné dans une position correcte sur le montant (20), et
dans lequel le montant (20) comporte en outre un moyen de fixation sous forme d'ouverture de fixation (30) contre laquelle est placé un écrou qui donne à l'ouverture de fixation (30) une surface annulaire filetée.

2. Montant de galerie de toit selon l'une quelconque des revendications précédentes, le montant (20) étant fixé à un système de montage comprenant un pied (90) présentant une ouverture (96), le montant (20) ayant un moyen de fixation de montant permettant de fixer le montant à une monture sur un véhicule.

3. Montant de galerie de toit selon la revendication 2, dans lequel le pied (90) comprend un bord périphérique (91) et un moyen de réception de patin de pied (92), et dans lequel le pied est fixé à un patin de pied (80) ayant une périphérie, une surface supérieure et une surface inférieure souple ; le patin de pied ayant une ouverture (81) s'étendant entre les surfaces supérieure et inférieure et le patin de pied comprenant un moyen de positionnement (82) destiné à s'engager avec le moyen de réception de patin de pied (92) pour positionner le patin de pied (80) sur le pied (90).

4. Montant de galerie de toit selon la revendication 3, dans lequel le moyen de fixation de montant comprend une ouverture et dans lequel le système de montage comprend en outre un bloc de serrage (100) comprenant une ouverture (102) qui s'aligne avec une ouverture de fixation (32) sur le montant (20) et s'aligne avec l'ouverture de pied (96) et l'ouverture de patin de pied (81) à travers laquelle un moyen de fixation peut saillir pour se fixer à une monture sur un véhicule, le pied (90) comprenant une paire d'ouvertures de réception de broches (93) et le bloc de serrage (100) comprenant des évidements de réception de broches (101) qui s'alignent avec les ouvertures de réception de broches (93), et dans lequel le montant (20) comprend des évidements de réception de broches (28), à travers lesquels une broche (121) est positionnée pour coupler avec faculté de pivotement le pied (90) au montant (20).

5. Montant de galerie de toit selon la revendication 4, dans lequel le moyen de fixation comprend un élément de montage bridé adapté pour s'engager avec un rail (150) sur un véhicule afin de fixer le montant (20) au véhicule et dans lequel le patin de pied comprend une surface inférieure profilée pour s'adapter par dessus le rail (150).

6. Montant de galerie de toit selon la revendication 1, dans lequel le montant (20) est fixé à un système de montage comprenant un premier élément de serrage (191) et un second élément de serrage (192), et dans lequel la position du second élément de serrage (192) relativement au montant (20) est réglable dans le sens x et dans le sens y.

7. Montant de galerie de toit selon la revendication 6, dans lequel le premier élément de serrage (191) comprend une première partie de serrage (201) et une ouverture de réglage (203), et le second élément de serrage (192) comprend : un corps présentant une fente (213) qui s'aligne avec l'ouverture de réglage (203), et présentant une seconde partie de serrage (212) saillant du corps, dans lequel au moins une partie du corps est inclinée vers le montant (20) ; et un élément de réglage (211) qui est adapté pour s'engager de façon amovible avec l'une d'une pluralité d'ouvertures (33) situées sur le montant (20) ; dans lequel le système de montage comprend également un moyen d'actionnement de serrage (221) qui s'engage avec l'ouverture de réglage (203) et la fente (213) pour forcer les premier et second éléments de serrage (191, 192) dans un sens de rapprochement ou d'écartement.

8. Montant de galerie de toit selon la revendication 1, dans lequel le montant (20) est fixé à un système de montage comprenant une plaque de charge (241) ayant un corps à partir duquel dépasse au moins un support (242, 243) adapté pour s'engager dans une ouverture de trappe sur un véhicule, et la plaque de charge (241) comprenant en outre un moyen permettant de fixer la plaque de charge (241) à un véhicule.

9. Montant de galerie de toit selon la revendication 1, dans lequel le montant (20) est fixé à un système de montage comprenant un pied (320) et un élément de serrage (330), le pied et l'élément de serrage comprenant chacun une ouverture de réglage (324, 332) en alignement l'un avec l'autre ; le système de montage comprenant en outre un moyen de réglage de fixation qui dépasse des ouvertures de réglage (324, 332), dans lequel le serrage ou le desserrage du moyen de réglage de fixation amène le pied (320) et l'élément de serrage (330) à se rapprocher ou à s'écarter l'un de l'autre.

10. Montant de galerie de toit selon la revendication 2, dans lequel le système de montage comprend en outre un bloc de serrage (200), fixé au montant (20) et au pied (90), et un élément de serrage (140) ayant une partie de fixation (144) qui est positionnée à proximité d'une surface de fixation sur le bloc de serrage (200), l'élément de serrage (140) présentant un crochet (141) au niveau de son extrémité distale ou près de celle-ci ; dans lequel la surface de fixation et la partie de fixation (144) comprennent chacune une ouverture (142) à travers laquelle est positionné un moyen de réglage de fixation pour fixer l'élément de serrage (140) au bloc de serrage (200), et dans lequel la surface de fixation sur le bloc de serrage (200) est inclinée de telle sorte que le serrage ou le desserrage du moyen de réglage de fixation amène le crochet (141) de l'élément de serrage (200) à se rapprocher ou s'écarter du bloc de serrage (200).

11. Montant de galerie de toit selon la revendication 1, dans lequel le montant (20) est fixé à un système de montage comprenant un pied (60) et un élément de serrage (70), un moyen de fixation (61, 73, 75) permettant de fixer l'élément de serrage (70) au pied (60), et un moyen de réglage d'élément de serrage (64, 65, 74, 75, 76) permettant de régler la position de l'élément de serrage par rapport au pied, dans lequel l'élément de serrage (70) comprend une partie de réglage adaptée pour s'engager dans une ouverture (65) dans le pied (60) et être guidée en position par un guide (64) situé sur le pied (60), et dans lequel l'élément de serrage (70) comprend aussi un crochet (72) destiné à s'accrocher autour d'une partie d'un rail sur un véhicule, et dans lequel le système de montage comprend en outre un moyen de réglage (76) adapté pour amener le crochet (72) à se rapprocher ou s'écarter du pied (60).

12. Montant de galerie de toit selon la revendication 1, dans lequel le montant est fixé à un système de montage comprenant un pied (300), un élément de guidage de réglage de serrage (330), et un élément de serrage réglable (340) présentant un corps (345) comprenant des moyens d'engagement qui sont adaptés pour s'engager avec un moyen de réglage de serrage ; dans lequel l'élément de guidage de réglage de serrage (330) comprend un corps présentant une fente (332) et un ou plusieurs connecteurs (333) saillant de la fente, chaque connecteur se trouvant en un engagement coulissant avec une ouverture (325) dans le pied (300) ; et dans lequel le corps de l'élément de guidage est adapté pour être engagé par coulissement avec une ouverture (341) dans l'élément de serrage (340) ; le système de montage comprenant en outre un moyen de réglage de serrage fixé avec faculté de mouvement au pied (300) et saillant à travers le moyen d'engagement de l'élément de serrage (340) et la fente (332) pour fixer l'élément de serrage et l'élément de guidage au pied (300), moyennant quoi l'élément de serrage (340) peut se déplacer dans le sens x ou le sens y par rapport au montant (20).

13. Galerie de toit comprenant un montant de galerie de toit selon l'une quelconque des revendications précédentes.
